(19) Europäisches Patentamt
European Patent Office
Office européen des brevets

(11) **EP 4 691 701 A1**

(12) **EUROPEAN PATENT APPLICATION**
published in accordance with Art. 153(4) EPC

(43) Date of publication:
**11.02.2026 Bulletin 2026/07**

(21) Application number: **23929934.0**

(22) Date of filing: **07.11.2023**

(51) International Patent Classification (IPC):
**B25J 9/16** (2006.01)

(86) International application number:
**PCT/CN2023/130283**

(87) International publication number:
**WO 2024/198364 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2023 CN 202310365117**

(71) Applicant: **Tencent Technology (Shenzhen) Company Limited**
**Shenzhen, Guangdong 518057 (CN)**

(72) Inventors:
• **WANG, Shuai**
**Shenzhen, Guangdong 518057 (CN)**

• **AN, Zhaohui**
**Shenzhen, Guangdong 518057 (CN)**
• **LEE, Wangwei**
**Shenzhen, Guangdong 518057 (CN)**
• **LIU, Tianliang**
**Shenzhen, Guangdong 518057 (CN)**
• **TENG, Xiao**
**Shenzhen, Guangdong 518057 (CN)**
• **ZHENG, Yu**
**Shenzhen, Guangdong 518057 (CN)**

(74) Representative: **EP&C**
**P.O. Box 3241**
**2280 GE Rijswijk (NL)**

(54) **CONTROL METHOD AND APPARATUS FOR ROBOTIC ARM, AND DEVICE AND STORAGE MEDIUM**

(57) The present application relates to the field of robots. Disclosed are a control method and apparatus for a robotic arm, and a device and a storage medium. In the method, a movable object is placed at any position on a robotic arm except for a tail end. The method comprises: acquiring a dynamic system, and obtaining, from the dynamic system, posture information associated with a robotic arm, wherein the dynamic system is constructed at least according to the robotic arm (120); determining control information on the basis of a mapping relationship between the posture information and the control information of the robotic arm (140); and controlling the movement of the robotic arm by using the control information, such that a movable object reaches a balanced state on the robotic arm (160).

Obtain a first motion state of a system comprising a first link of the robotic arm and a movable object placed on the first link — 120

Determine the first control information based on the first mapping relationship and the first motion state — 140

Control a movement of the first link according to the first control information thereby causing the movable object to be in the pre-defined balanced state on the first link — 160

**FIG. 4**

**Description**

CROSS-REFERENCES TO RELATED APPLICATION

This application claims priority to Chinese Patent Application No. 202310365117.9, entitled "CONTROL METHOD AND APPARATUS FOR ROBOTIC ARM, AND DEVICE AND STORAGE MEDIUM" and filed on March 31, 2023.

FIELD OF THE TECHNOLOGY

This application relates to the field of robots and, in particular, to a robotic arm control method and apparatus, a device, and a storage medium.

BACKGROUND OF THE DISCLOSURE

Nowadays, robots have gradually become irreplaceable tools in production, service and other fields. A robotic arm is a commonly used effector of a robot, which plays an important role in production and life.

An end of the robotic arm is usually used to implement an operation task. Alternatively, an end effector is installed at the end of the robotic arm to implement a corresponding operation. For example, a mechanical finger is mounted at the end of the robotic arm, and the operation is performed by controlling movement of the robotic arm and the mechanical finger.

SUMMARY

All embodiments of this application provide a robotic arm control method and apparatus, a device, and a storage medium, to keep a movable object balanced at any position on a robotic arm other than an end without falling. The technical solutions are as follows.

According to an aspect of this application, a robotic arm control method is provided, the method is performed by a controller of the robotic arm, and the method includes:

obtaining a first motion state of a system comprising a first link of the robotic arm and a movable object placed on the first link;

determining a first mapping relationship for mapping the first motion state to a first control information for controlling the first link to cause the movable object to be in a pre-defined balanced state on the first link; and

determining the first control information based on the first mapping relationship and the first motion state, in order to control a movement of the first link according to the first control information thereby causing the movable object to be in the pre-defined balanced state on the first link.

According to an aspect of this application, a robotic arm control apparatus is provided. The apparatus includes: an obtaining module, configured to obtain a first motion state of a system comprising a first link of the robotic arm and a movable object placed on the first link; a determining module, configured to determine a first mapping relationship for mapping the first motion state to a first control information for controlling the first link to cause the movable object to be in a pre-defined balanced state on the first link; and a control module, configured to determine the first control information based on the first mapping relationship and the first motion state, in order to control a movement of the first link according to the first control information thereby causing the movable object to be in the pre-defined balanced state on the first link.

According to an aspect of this application, a robotic arm is provided. The robotic arm includes a memory and a controller.

The memory has at least one program code stored therein. The program code is loaded and executed by the controller, to implement the robotic arm control method described above.

According to an aspect of this application, a computer-readable storage medium is provided. The computer-readable storage medium has a computer program stored therein. The computer program is configured to be executed by a processor, to implement the robotic arm control method described above.

According to an aspect of this application, a chip is provided. The chip includes a programmable logic circuit and/or program instructions, and when an electronic device in which the chip is installed runs, is configured to implement the robotic arm control method described above.

According to an aspect of this application, a computer program product is provided. The computer program product includes computer instructions, the computer instructions are stored in a computer-readable storage medium, and a processor reads the computer instructions from the computer-readable storage medium and executes the computer instructions, to implement the robotic arm control method described above.

The technical solutions provided in all embodiments of this application include at least the following beneficial effects:

A new method for using a robotic arm is provided, which can keep a movable object balanced at any position on the first link of the robotic arm other than an end without falling, such as preventing the movable object from sliding off forearm the first link of the robotic arm. Based on a first mapping relationship, the first control information can be determined and used to control a movement of the first link, thereby causing the movable object to be in the pre-defined balanced state on the first link

BRIEF DESCRIPTION OF THE DRAWINGS

FIG. 1 is a schematic diagram of a robotic arm according to all embodiments of this application.

FIG. 2 is a schematic diagram of a robotic arm according to all embodiments of present disclosure.

FIG. 3 is a schematic diagram of a robotic arm according to all embodiments of present disclosure.

FIG. 4 is a flowchart of a robotic arm control method according to all embodiments of present disclosure.

FIG. 5 is a schematic diagram of balancing of a robotic arm according to all embodiments of present disclosure.

FIG. 6 is a schematic diagram of balancing of a robotic arm according to the embodiments of present disclosure.

FIG. 7 is a flowchart of a robotic arm control method according to all embodiments of present disclosure.

FIG. 8 is a flowchart of a robotic arm control method according to all embodiments of present disclosure.

FIG. 9 is a flowchart of a robotic arm control method according to all embodiments of present disclosure.

FIG. 10 is a schematic diagram of a two-dimensional plane of a robotic arm according to all embodiments of present disclosure.

FIG. 11 is a schematic diagram of a two-dimensional plane of a robotic arm according to all embodiments of present disclosure.

FIG. 12 is a schematic diagram of a three-dimensional space of a robotic arm according to all embodiments of present disclosure.

FIG. 13 is a schematic diagram of a three-dimensional space of a robotic arm according to all embodiments of present disclosure.

FIG. 14 is a schematic diagram of balancing of a robotic arm according to all embodiments of present disclosure.

FIG. 15 is a schematic diagram of balancing of a robotic arm according to all embodiments of present disclosure.

FIG. 16 is a schematic diagram of balancing of a robotic arm according to all embodiments of present disclosure.

FIG. 17 is a schematic diagram of an overall control architecture of a robotic arm according to all embodiments of present disclosure.

FIG. 18 is a schematic diagram of a control apparatus of a robotic arm according to all embodiments of present disclosure.

FIG. 19 is a structural block diagram of a robotic arm according to all embodiments of present disclosure.

DESCRIPTION OF EMBODIMENTS

A robotic arm is a common robot effector. With the widely application of artificial intelligence, the robotic arm plays an important role in production and life, and becomes a necessary device. During the use of the robotic arm, an end of the robotic arm is usually used to complete an operation task; or an end effector is mounted at the end of the robotic arm to complete a corresponding operation, such as mounting a mechanical finger at the end of the robotic arm to complete the operation by controlling movement of the robotic arm and the mechanical finger.

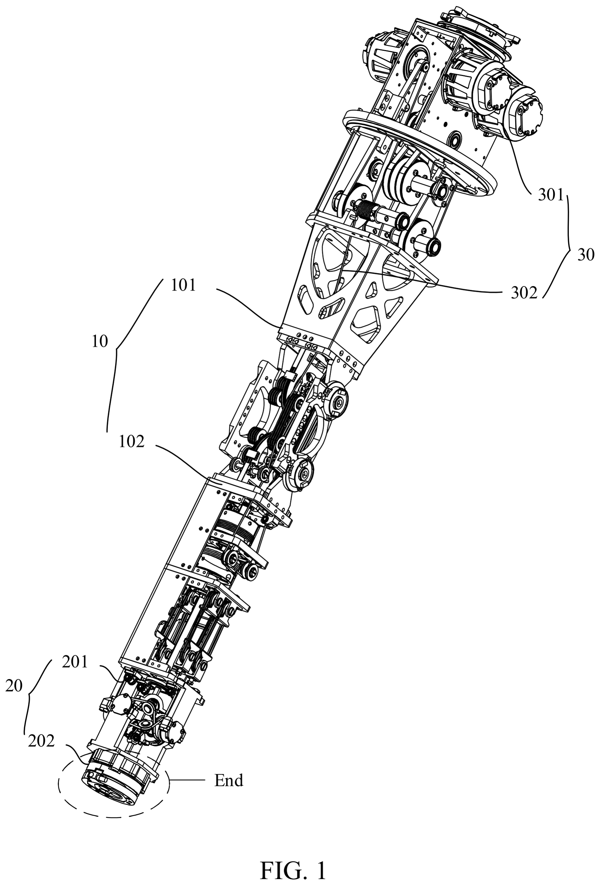

Often, a rigid body connector and/or a shell of the robotic arm is not considered to be able to complete the operation task. First, an appearance of the robotic arm is generally designed as a curved surface without a large plane. Second, if there is no grasping mechanism design such as a mechanical finger or a robotic finger, contact between the appearance of the robotic arm and an external object does not form a shape closure and a force closure, which makes control of the robotic arm more difficult. FIG. 1 is a schematic diagram of a robotic arm according to all embodiments of present disclosure.

In the embodiments including the embodiments of both the claims and the specification (hereinafter referred to as "all embodiments of this application), the robotic arm is a robotic arm has a 7 degree of freedom. Control motors of an elbow and a wrist of the robotic arm are arranged at a hollow of a third joint of a shoulder. In all embodiments, rope actuation of the elbow and the wrist is transmitted to a pulley by a belt driven by the motor at the shoulder, and the pulley performs corresponding movement control of the elbow and the wrist by a belt transmission rope.

For example, the robotic arm includes: a first robotic joint 10, a second robotic joint 20, and an actuation assembly 30. The first robotic joint 10 includes a first fixed member 101 and a first movable member 102 that are rotatably connected. The second robotic joint 20 includes a second fixed member 201 and a second movable member 202 that are rotatably connected. The second fixed member 201 is connected to the first movable member 102.

The actuation assembly 30 includes at least two actuation sources 301 and at least two actuation ropes 302. Each of the at least two actuation sources 301 is connected to the first fixed member 101, the first movable member 102, and the second movable member 202 by at least one actuation rope 302. The at least two actuation sources 301 include a first working mode and a second working mode.

In the first working mode, the at least two actuation sources 301 can actuate the second movable member 202 to rotate relative to the second fixed member 201, and cause the first movable member 102 to be fixed relative to a position of the first fixed member 101. In the second working mode, the at least two actuation sources 301 can actuate the second movable member 202, the second fixed member 201, and the first movable member 102 to rotate relative to the first fixed member 101, and cause the second movable member 202 to be fixed relative to a position of the second fixed member 201.

The robotic arm in present disclosure includes the first robotic joint 10, the second robotic joint 20, and the actuation assembly 30. The actuation assembly 30 includes at least two actuation sources 301 and at least two actuation ropes 302. Each of the at least two actuation sources 301 is connected to the first movable member 102 of the first robotic joint 10, the second movable member 202 of the second robotic joint 20, and the first fixed member 101 of the first robotic joint 10 through at least one actuation rope 302. In the first working mode, the at least two actuation sources 301 can actuate the second movable member 202 to rotate relative to the second fixed member 201, and cause the first movable member 102 to be fixed relative to the position of the first fixed member 101. In the second working mode, the at least two actuation sources 301 can actuate the second movable member 202, the second fixed member 201, and the first movable member 102 to rotate relative to the first fixed member 101, and cause the second movable member 202 to be fixed relative to the position of the second fixed member 201. In this way, the at least two actuation sources 301 can perform coupling actuation on a plurality of joints, utilization of the actuation source 301 is improved, structural complexity of robotic joints is reduced, rotational inertia of the robotic joints is increased, and movement performance of the robotic joints is enhanced.

In addition, in all embodiments, when the second robotic joint 20 independently moves (for example, the second movable member 202 rotates relative to the second fixed member 201, but the first movable member 102 is fixed relative to the first fixed member 101), and when the first robotic joint 10 drives the second robotic joint 20 to move in coupling (for example, the second movable member 202, the second fixed member 201, and the first movable member 102 rotate relative to the first fixed member 101, and the second movable member 202 is fixed relative to the position of the second fixed member 201), the at least two actuation sources 301 actuate at the same time. In other words, a joint corresponding to any degree of freedom moves actuated by power of the at least two actuation sources 301 regardless, and compared with a solution in which a joint corresponding to a single degree of freedom is actuated by a single actuation source 301, the at least two actuation sources 301 can perform coupling actuation on a single movable member, to achieve at least twice traction drive, which is conducive to improving working performance of the movable member such as a rotation moment and a rotation speed.

In all embodiments, the at least two actuation sources 301 include motors and driving rope pulleys. The motor is connected to the driving rope pulley through a transmission mechanism, and the motor drives, through the transmission mechanism, the driving rope pulley to rotate. The actuation rope 302 winds around the driving rope pulley. When the driving rope pulley rotates, the driving rope pulley can tightly wind the actuation rope 302 thereon, to produce a traction force on at least one of the first fixed member 101, the first movable member 102, and the second movable member 202 through the actuation rope 302. In all embodiments, the transmission mechanism includes, but is not limited to, a belt transmission mechanism, a gear transmission mechanism, a worm gear transmission mechanism, and the like.

For example, the transmission mechanism is the belt transmission mechanism, and includes, for example, a driving pulley, a transmission belt, and a passive pulley. The driving pulley is connected to an output shaft of a motor, the passive pulley is connected to the driving rope pulley, and the transmission belt is connected between the driving pulley and the passive pulley.

For another example, the transmission mechanism is the belt transmission mechanism, and further includes, for example, a tensioning mechanism. The tensioning mechanism is close to a transmission belt, and can be configured to adjust a tension force of the transmission belt.

In some implementation, the first working mode and the second working mode may be, for example, different working modes formed based on different or the same rotation direction of the at least two actuation sources 301; or may be different working modes formed based on different or the same rotation speed of the at least two actuation sources 301; or may be different working modes formed based on different or the same rotation direction or rotation speed of the at least two actuation sources 301. In all embodiments, in the first working mode, the at least two actuation sources 301 rotate in the same direction; and in the second working mode, the at least two actuation sources 301 rotate in opposite directions.

Therefore, in all embodiments, the robotic arm can control, by controlling the rotation direction of the at least two actuation sources 301, the second robotic joint 20 to independently move and the first robotic joint 10 to drive the second robotic joint 20 to move in coupling. In this way, a structure is simple, and coupling control efficiency is high. In all embodiments, in the first working mode, the at least two actuation sources 301 rotate in opposite directions; and in the second working mode, the at least two actuation sources 301 rotate in the same direction. In addition, for example, in the first working mode and in the second working mode, the rotation speeds and output torques of the at least two actuation sources 301 are the same.

With reference to FIG. 1, in all embodiments, the at least actuation sources 301 are located on a side of the first fixed member 101 facing away from the first movable member 102, and the at least two actuation ropes 302 pass through the first fixed member 101 to be connected to the first movable member 102, and pass through the second fixed member 201 to be connected to the second movable member 202. In this way, in the robotic arm in all embodiments, the at least two actuation sources 301 are arranged on the side of the first fixed member 101 facing away from the first movable member 102, and the actuation ropes 302 pass through the first fixed member 101 to be connected to the first movable member 102, and pass through the second fixed member 201 to be connected to the second movable member 202; mass of the at least two actuation sources 301 are aggregated on a side on which the first fixed member 101 is located, mass of a side on which the first movable member 102, and the second fixed member 201, and the second movable member 202 are located is small, which is conducive to improving rotational inertia of a structure of the side and improving operation performance of the robotic arm.

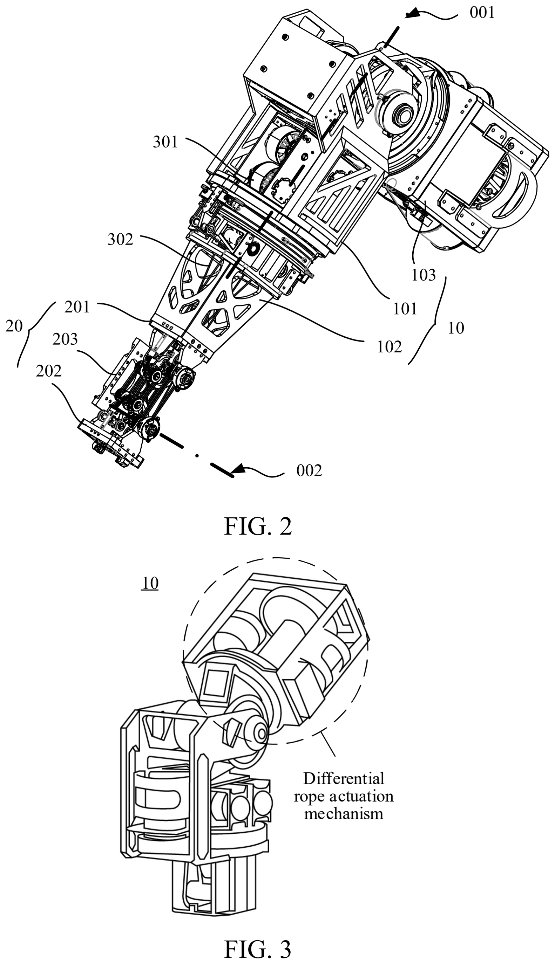

With reference to FIG. 2, in all embodiments, the first robotic joint 10 is a robotic shoulder joint, and the second robotic joint 20 is a robotic elbow joint; the first fixed member 101 is rotatably connected to the first movable member 102 along a first axis 001; and the second fixed member 201 is rotatably connected to the second movable member 202 along a second axis 002.

In the first working mode, the at least two actuation sources 301 can actuate the second movable member 202 to rotate relative to the second fixed member 201 around the second axis 002, and cause the first movable member 102 to be fixed relative to the position of the first fixed member 101. In the second working mode, the at least two actuation sources 301 can actuate the second robotic joint 20 and the first movable member 102 to rotate relative to the first fixed member 101 around the first axis 001, and cause the second movable member 202 to be fixed relative to the position of the second fixed member 201.

In all embodiments, the first robotic joint 10 is a robotic shoulder joint, and the second robotic joint 20 is a robotic elbow joint. In the first working mode, the at least two actuation sources 301 can actuate the second movable member 202 of the robotic elbow joint to rotate relative to the second fixed member 201 of the robotic elbow joint around the second axis 002, and the first movable member 102 of the robotic shoulder joint is fixed relative to the position of the first fixed member 101 of the robotic shoulder joint, to implement independent movement of the robotic elbow joint.

In the second working mode, the at least two actuation sources 301 can actuate the first movable member 102 of the robotic shoulder joint to drive the whole robotic elbow joint (including the second fixed member 201 and the second movable member 202) to rotate relative to the first fixed member 101 of the robotic shoulder joint around the first axis 001, but the second movable member 202 of the robotic elbow joint is fixed relative to the position of the second fixed member 201 of the robotic elbow joint, to implement coupling movement of the robotic elbow joint and the robotic shoulder joint.

For example, the robotic arm may use a set of actuation sources 301, and a controller may respectively actuate the robotic elbow joint and the robotic shoulder joint by controlling the set of actuation sources 301 to run in different working modes. Both degrees of freedom of the robotic elbow joint and the robotic shoulder joint can be driven through traction by the at least two actuation sources 301, to implement at least twice traction force drive, which is conducive to improving work performance such as a rotation moment and a rotation speed of the robotic elbow joint and the robotic shoulder joint.

In all embodiments, the robotic arm further includes a robotic wrist joint, the robotic shoulder joint is connected to the robotic elbow joint, and the robotic wrist joint is connected to the robotic elbow joint, to form a complete robotic arm. In all embodiments, the at least two actuation sources 301 are located in the second movable member 202, are connected to the second movable member 202, and move with the second movable member 202.

With reference to FIG. 2, in all embodiments, the first axis 001 and the second axis 002 intersect with each other perpendicularly. Therefore, the first robotic joint 10 (for example, the robotic shoulder joint) can drive the second robotic joint 20 (for example, the robotic elbow joint) to rotate, to simulate a motion of forearm rotation in an arm of a human body, and the second robotic joint 20 can rotate in a large range (for example, 0° to 360°) in space, so that action scenarios of the robotic arm are enriched, and an application range of the robotic arm is increased. With reference to FIG. 2, in all embodiments, the first robotic joint 10 further includes a third fixed member 103; and the first fixed member 101 is rotatably connected to the third fixed member 103. Therefore, the first robotic joint 10 includes the third fixed member 103, the first fixed member 101, and the first movable member 102 that are rotatably connected in sequence. In all embodiments, the first fixed member 101 is actuated to rotate relative to the second fixed member 201 by a shoulder actuation assembly, to simulate a lifting motion of a shoulder joint of an arm of a human body. The second fixed member 201 is fixedly connected to a torso or another support structure of a robot, and functions to fixedly support the entire robotic arm.

With reference to FIG. 2, in all embodiments, the second robotic joint 20 further includes a first connector 203, the second fixed member 201 is rotatably connected to the first connector 203, and the first connector 203 is in a rotatably connected to the second movable member 202. Therefore, in the robotic arm in all embodiments, the second fixed member 201 in the second robotic joint 20 is rotatably connected to the second movable member 202 through the first connector 203, so that the second axis 002 can be set at a position far from the second fixed member 201, and an angle by which the second movable member 202 can rotate relative to the second fixed member 201 is significantly expanded. In addition, in the robotic arm in present disclosure, difficulty in routing the actuation rope 302 of the robotic elbow joint is reduced, which is conducive to reducing difficulty in assembly and maintenance of the robotic elbow joint.

In the robotic arm in all embodiments, the at least two actuation sources 301 include two elbow driving rope pulleys, the two elbow driving rope pulleys are mounted in the first movable member 102, the two elbow driving rope pulleys can respectively actuate two elbow actuation ropes 302, and that the two elbow actuation ropes 302 wind around the two elbow driving rope pulleys implements connection between the actuation rope 302 and the first movable member 102.

The at least two actuation ropes 302 include the two elbow actuation ropes 302. The two elbow actuation ropes 302 are respectively connected to the first fixed member 101, the first movable member 102, and the second movable member 202, respectively connected to a first position and a second position of the second movable member 202, and finally connected to the second movable member 202 in opposite winding directions.

Referring to FIG. 3, an example in which the first robotic joint 10 is the robotic shoulder joint is used. In a low-inertial differential shoulder joint structure of a robotic arm having 7 degrees of freedom, a differential rope actuation mechanism is used at the shoulder, which can reduce a weight of the mechanism and back a motor module, and may further implement moment superposition in some cases. The third degree of freedom of the shoulder joint is achieved by using a gear pair including a large cycloidal gear and a small cycloidal gear, which are driven by a rope for transmission, thereby further improving transmission precision and reducing the weight. Finally, actuation modules for the wrist joint and the elbow joint are placed in an upper arm module of the shoulder joint, thereby reducing the weight of the entire robotic arm.

Based on this, the structure of the robotic arm can be easily modularized, thereby simplifying the manufacturing process of the robotic arm.

Referring to the foregoing content, the end of the robotic arm is usually used to complete an operation task. All embodiments of present disclosure provide a robotic arm control method, to complete a balancing task by using a non-end part of a robotic arm. In this way, a movable object can remain balanced at any position on the robotic arm other than the end of the robotic arm.

As used herein, an "end of the robotic arm" is used for indicating an end of the robotic arm away from the shoulder joint. In all embodiments, the robotic arm is formed by a plurality of links connected head to tail. For example, a link 1 and a link 2 form a robotic arm, a first end of the link 1 is a shoulder joint, a second end of the link 1 is connected to a first end of the link 2, and an end is configured for indicating a second end of the link 2. In all embodiments, the end may alternatively be understood as a robotic apparatus connected to an end of the robotic arm away from the shoulder joint, such as a robotic hand providing a grabbing function, a magnetic sucker providing an attraction capability, or a bionic hand providing a bionic movement capability. For example, in a robotic arm is formed by a link 1 and a link 2, a first end of the link 2 is connected to the link 1, a second end of the link 2 is a robotic hand, and the end is configured for indicating the robotic hand on the link 2. Referring to FIG. 1, when the robotic arm is mounted on a robot body, the second movable member 202 is an end of the robotic arm away from the shoulder joint, that is, the end of the robotic arm described in all embodiments of present disclosure.

The movable object may be configured for indicating any three-dimensional object occupying specific space, and a shape, a size, a material, mass, and the like of the object are not limited. Further, at least one outer surface of the movable object is a curved surface, or at least one edge on the outer surface of the movable object is a curve. In an implementation, the movable object can roll and/or slide on the robotic arm under action of gravity. For example, the movable object may be a bottle, a rod piece, a sphere, or an irregular object. Further, a cross section of the movable object is a circle, an ellipse, or a closed shape formed by a curve. The movable object is a non-fixed object, and the movable object is not fixed to the robotic arm. For example, the movable object and the robotic arm are not fixed through any one of a fastener, a tenon joint structure, soldering, or the like. The movable object may be placed at any position on the robotic arm other than the end, and is not fixed to the robotic arm. Further, the movable object is placed at any position other than the end of the robotic arm. A part of the outer surface of the movable object is in contact with the robotic arm, and other parts of the outer surface are not in contact with the robotic arm.

Using an example in which the movable object is a bottle, for a robotic arm having a plurality of degrees of freedom, in the robotic arm control method provided in all embodiments of present disclosure, by using a non-end link (for example, a forearm of the robotic arm) of the robotic arm, the bottle is balanced on a surface of the forearm of the robotic arm without falling. The control method provided in all embodiments of present disclosure may be implemented by the foregoing controller of the robotic arm. The controller may be arranged in the robotic arm, or may be arranged outside the robotic arm and connected to the robotic arm in a wired or wireless manner, to control movement of the robotic arm.

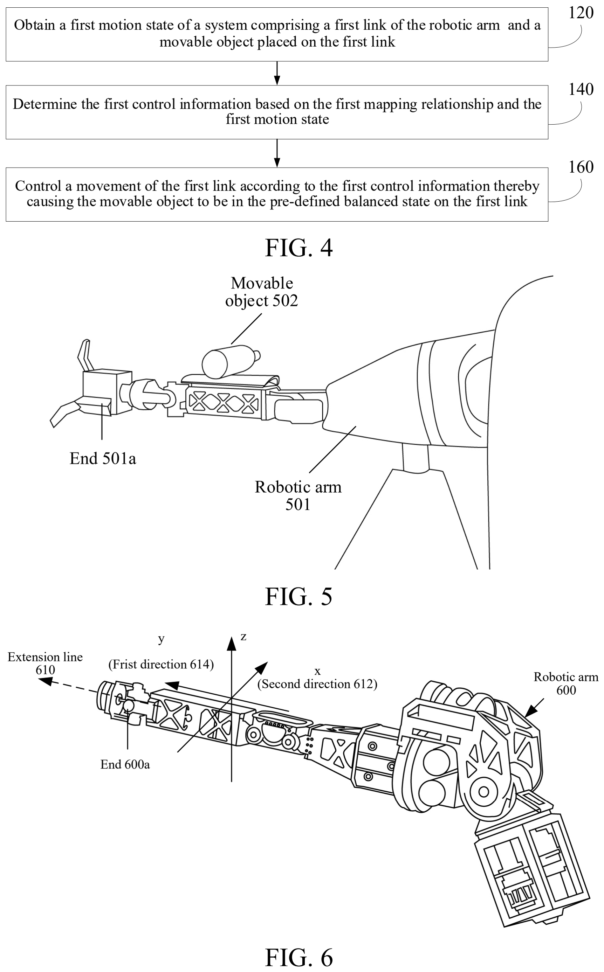

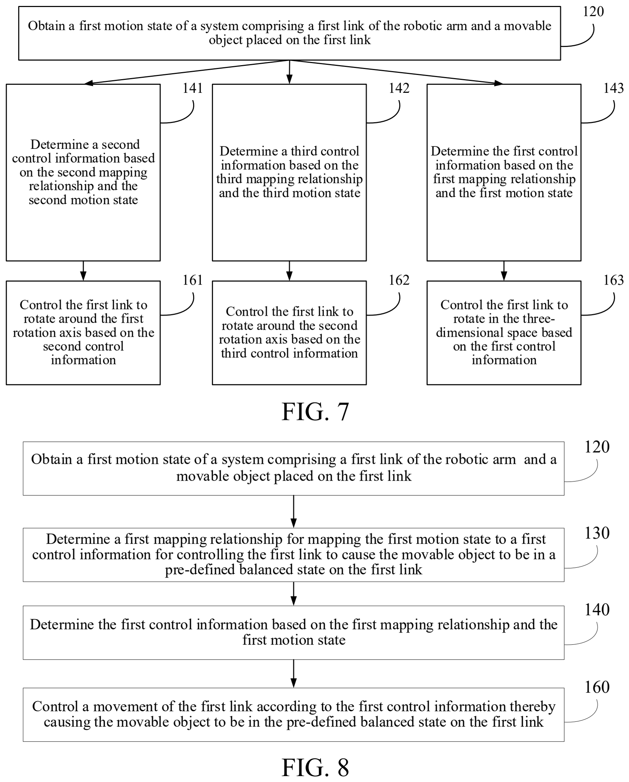

FIG. 4 is a flowchart of a robotic arm control method according to all embodiments of present disclosure. FIG. 5 is a schematic diagram of balancing of a robotic arm according to all embodiments of present disclosure. FIG. 8 is a flowchart of a robotic arm control method according to all embodiments of present disclosure. A movable object 502 may be placed at any position on a robotic arm 501 other than an end 501a. For introduction of the movable object 502, refer to the foregoing content. Referring to FIG. 5, an example in which the movable object is a bottle is used, and the bottle is placed on a forearm of the robotic arm. For example, the robotic arm includes two links, that is, a forearm and an upper arm. Any adjacent two links are connected by at least one joint. An end of the robotic arm may be an end-effector, for example a gripper, and so on. The robotic arm control method provided in all embodiments of present disclosure includes:

**Operation 120:** Obtain a first motion state of a system comprising a first link of the robotic arm and a movable object placed on the first link.

For example, the first link may be a forearm or an upper arm of the robotic arm. Control of the first link (or may be understood as a dynamic response in which the first link balances the movable object) is double-restricted by movement of the first link and movement of the movable object. The first motion state includes a motion state of first link and a motion state of the movable object.

In all embodiments, a coordinate system may be constructed based on the robotic arm, and torque information and/or motion information, such as a torque of each joint of the robotic arm and/or a displacement amount of each link relative to an initial position, of the robotic arm may be obtained through at least one sensor associated with the robotic arm. The at least one sensor includes, but is not limited to, one of the following sensors: a moment sensor, a tactile sensor, a visual sensor, and the like. Related information of the movable object, such as a position of the movable object relative to the first link, may further be obtained through the at least one sensor. Subsequently, a first motion state may be describe based on the constructed coordinate system.

When the robotic arm fully extends, a line connects two ends of the robotic arm, a direction of a straight line perpendicular to the connection line between the two ends when the robotic arm extends is an x direction, a direction of the connection line between the two ends when the robotic arm extends is a y direction, and a direction of a perpendicular line perpendicular to the robotic arm when the robotic arm extends is a z direction. For example, the y direction is a first direction 614 in all embodiments of present disclosure, the x direction is a second direction 612 in all embodiments of present disclosure. In all embodiments, a y direction (i.e., a first direction) is determined as the axial direction of the first link (i.e., the direction along the extension line of the first link). An x direction (i.e., a second direction) is horizontal and perpendicular to the axial direction of the first link.

Based on this, the straight line perpendicular to the connection line between the two ends of the robotic arm when the robotic arm extends is an x-axis (which may also be referred to as a first rotation axis), and the x-axis is located at an end of the robotic arm close to the shoulder joint. When the robotic arm extends, an extension line of the connection line between the two ends is a y-axis (which may also be referred to as a second rotation axis), and the y-axis passes through a center of the first link. For example, the robotic arm may rotate around the x-axis and/or the y-axis, an angle by which the first link rotates around the x-axis may be considered as a pitch angle, and an angle by which the robotic arm rotates around the y-axis may be considered as a roll angle. The extension line of the robotic arm is an extension direction of the robotic arm when the robotic arm extends straight. For example, a vertical direction and the direction of the earth gravity are on a same straight line, and a horizontal plane is a plane in which a horizontal direction perpendicular to the earth gravity is located. For example, FIG. 6 shows an extension line 610 when the robotic arm extends straight. For example, the extension line 610 is a ray pointing out of the robotic arm from an end 600a of the robotic arm 600. A direction of the extension line 610 is parallel to a direction starting from a center of mass of the forearm of the robotic arm 610 and pointing to the end 600a of the robotic arm. For example, in FIG. 6, the extension line 610 and the y-axis are parallel. For example, the extension line 610 in FIG. 6 starts from the forearm of the robotic arm 600. For example, the extension line 610 may start from any position on the robotic arm 600. In another implementation, a direction of the extension line 610 may be indicated by a ray starting at a position other than the robotic arm 600. This is not limited in all embodiments.

In all embodiments, the system may be constructed based on the robotic arm and the movable object. Referring to FIG. 5 and FIG. 6, when the movable object is placed at any position other than the end of the robotic arm, the movable object needs to be displayed in the x direction. An example in which the movable object is a bottle, and the bottle is considered as a cylinder. In this case, a direction in which a length of the cylinder locates is an x direction, and a plane in which a ground of the cylinder locates is a plane formed by a y axis and a z axis.

For example, after the system is constructed, first motion state of the system may be obtained. The first motion state is configured for indicating information obtained based on the system. In all embodiments, the first motion state includes at least one piece of the following information: torque to first link, the motion state of the first link, and motion state of the movable object. For example, the first motion state includes one piece of the following information: rotation angles of the robotic arm in different two-dimensional planes which may be understood as the roll angle and pitch angle of the first link, the pitch angle of the movable object (i.e., an included angle between the movable object and a horizontal plane), and a distance in the first direction between a center of the movable object and a center of a joint that controls the first link to rotate and a distance in an axial direction of the movable object between a center of the movable object and a center of first link. The center of the movable object may be a geometric center or a center of mass of the movable object. The center of first link may be a geometric center or a center of mass of first link. In all embodiments, the first motion state may be obtained through the visual sensor. For example, a camera is disposed on the robotic arm or in an external environment, to obtain image information of the robotic arm and the movable object. The image information is configured for showing that the movable object is placed on the robotic arm. Subsequently, the image information is processed to obtain an image processing result. For example, after the image information is obtained, cluster analysis is performed based on at least one of information such as a color, a material, a surface texture, and a connected area of the movable object and an object in the environment, to determine a geometric center of the movable object, and a position of the geometric center and a position of a center of mass in the system can be determined subsequently. Based on this, with reference to the related information of the robotic arm, the first motion state can be obtained. In all embodiments, the first motion state may alternatively be obtained through the visual sensor and the tactile sensor. For example, the tactile sensor is laid on a housing of the robotic arm, to collect a corresponding tactile signal when the movable object is placed on the robotic arm. Based on this, a specific position of the movable object on the robotic arm can be obtained accurately, and with reference to the image information of the system, the first motion state can be obtained.

**Operation 130:** Determine a first mapping relationship for mapping the first motion state to a first control information for controlling the first link to cause the movable object to be in a pre-defined balanced state on the first link.

**Operation 140:** Determine the first control information based on the first mapping relationship and the first motion state, in order to perform control a movement of the first link according to the first control information, thereby causing the movable object to be in the pre-defined balanced state on the first link. In all embodiments, the determining the first mapping relationship comprises obtaining a pre-set first mapping relationship, or constructing the first mapping relationship based on the first motion state.

Referring to FIG. 5, the movable object is placed at any position on the robotic arm other than the end. An objective of the robotic arm control method provided in all embodiments of present disclosure is to ensure that the movable object is in a pre-defined balanced state on the first link. Based on this, the controller needs to evaluate a first motion state at a next moment based on a first motion state of the system at a current moment, and determine, based on the motion state at the next moment, first control information at the next moment, so that the movable object can always remain balanced on the first link without falling.

The first control information may be determined based on the first mapping relationship for mapping the first motion state to the first control information. Referring to the foregoing content, the system is constructed based on the robotic arm and/or the movable object.

Referring to the system shown in FIG. 6, an example in which the second direction 612 is horizontal and perpendicular to an axial direction of the forearm of the robotic arm when the robotic arm extends, that is, a direction of the horizontal line perpendicular to the robotic arm when the robotic arm extends, the first direction 614 is the axial direction of the forearm of the robotic arm when the robotic arm extends, that is, a direction of the extension line of the robotic arm when the robotic arm extends, and the perpendicular direction is perpendicular to the connection line between the two ends of the robotic arm when the robotic arm extends. Any two of the second direction 612 (namely, the x direction), the first direction 614 (namely, the y direction), and the perpendicular direction (namely, the z direction) are perpendicular. In all embodiments, a three-dimensional space is defined by the x direction, the y direction, and the z direction, a three-dimensional space is defined by the x, y, and z axes

A first plane and a second plane are formed in the three-dimensional space. The first plane is configured for indicating a two-dimensional plane constructed by the second direction and the perpendicular direction (which may alternatively be understood as an XOZ plane), and the second plane is configured for indicating another two-dimensional plane constructed by the second direction and the perpendicular direction (which may alternatively be understood as a YOZ plane).

In all embodiments, a 2-dimensional (2D) model may be constructed based on the XOZ plane and the YOZ plane, and mapping relationships in the XOZ plane and the YOZ plane may be respectively determined based on the XOZ plane and the YOZ plane. In all embodiments, the first mapping relationship includes a second mapping relationship and a second mapping relationship. The second mapping relationship is configured for mapping the second motion state in the first plane (namely, the XOZ plane) to the second control information, and the third mapping relationship is configured for mapping the third motion state in the second plane (namely, the YOZ plane) to the third control information. In all embodiments, a 3-dimensional (3D) model may be constructed based on the three-dimensional space, and the first mapping relationship is determined based on the three-dimensional space. In all embodiments, the third mapping relationship is configured for mapping the first motion state in the three-dimensional space to the first control information.

For example, kinetic energy and potential energy in the first plane and the second plane are determined, where the kinetic energy and the potential energy are configured for constructing a Euler-Lagrange equation respectively based on the first plane and the second plane; and the second mapping relationship and the third mapping relationship are determined based on the Euler-Lagrange equation. For another example, kinetic energy and potential energy in the three-dimensional space are determined, where the kinetic energy and the potential energy are configured for constructing a Euler-Lagrange equation; and the first mapping relationship is determined based on the Euler-Lagrange equation.

A difference exists between kinetic energy and potential energy determined based on the first plane, the second plane, and the three-dimensional space, consequently, a difference also exists between constructed Euler-Lagrange equations, and therefore, the determined mapping relationships are affected, to obtain the second mapping relationship, the third mapping relationship, and the third mapping relationship.

For example, after the first mapping relationship is constructed, the controller of the robotic arm obtains t can determine the first control information. Based on different mapping relationships, the obtained control information is different.

In all embodiments, the first control information includes second control information and third control information. The controller may determine the second control information based on the second mapping relationship, and determine the third control information based on the third mapping relationship. The second control information includes a first torque applied in a pitch direction in which the first link rotates around the first rotation axis, the third control information includes a second torque applied in a roll direction in which the first link rotates around the second rotation axis, the first rotation axis is along the second direction 612, and the second rotation axis is along the first direction 614.

In all embodiments, the controller may determine the second control information and the third control information based on the first mapping relationship. The second control information may alternatively be understood as the first torque, and the third control information may alternatively be understood as the second torque.

**Operation 160:** Control a movement of the first link according to the first control information thereby causing the movable object to be in the pre-defined balanced state on the first link.

In all embodiments, the first control information includes the second control information and the third control information. The second control information is configured for indicating the first torque, and the third control information is configured for indicating the second torque. Alternatively, the first control information includes the first torque and/or the second torque.

In all embodiments, the first control information includes the first torque, and operation 160 may be implemented as: controlling, based on the first torque, the robotic arm to move around the first rotation axis, that is, controlling a pitch movement of first link according to the first torque. In all embodiments, the first control information includes the second torque, and operation 160 may be implemented as: controlling, based on the second torque, the robotic arm to move around the second rotation axis, that is, controlling a roll movement of first link according to the second torque. A direction of the second rotation axis is the first direction 614 in FIG. 6. Referring to the foregoing content, the controller control the robotic arm based on the first control information, so that the movable object remains balanced on the first link. Based on this, operation 160 may be implemented as: controlling, according to the first control information, the robotic arm to perform at least one movement, to cause the movable object to be in the pre-defined balanced state on the robotic arm, where the at least one movement of the first link comprising at least one of : keeping relatively stationary to the movable object, a roll movement and a pitch movement.

The first control information is used to formed a sequence for at least one moment, and at least one movement of at least one joint for controlling the first link is implemented based on the sequence. Based on the at least one movement of at least one joint, the first link visually presents two states: a stationary state and a moving state. That the first link visually presents the stationary state may be understood as that a movement of the first link is remaining relatively stationary. In other words, based on at least one movement of at least one joint, the first link visually presents a representation that the first link is stationary. That is, the first link visually presents the moving state may be understood as that the at least one movement of the first link includes a roll movement and/or a pitch movement. In other words, based on at least one movement, the first link can visually present a representation that the robotic arm is moving. The moving may be movement and/or rotation of the first link. For example, the first link swings up and down by using the elbow joint as a center, or the robotic arm rotates left and right by using the elbow joint as a rotation center.

In all embodiments,, the pre-defined balanced state is configured for indicating that the movable object is in a state of mechanical equilibrium. In this case, the movable object may no longer move, or may be in a state of uniform linear motion relative to the first link; further, a motion speed of the movable object is less than a preset speed, for example, 1 centimeter per second; and this is also referred to as a state of small amplitude movement. Further, the pre-defined balanced state is configured for indicating a state in which the movable object is in the state of force-bearing balance and no longer moves (the movable object and the robotic arm remain relatively stationary). The pre-defined balanced state may include the following two types: a statically balanced state, where the movable object in the statically balanced state is stationary on the first link (or it may be understood as that the movable object is stationary relative to the first link); and a dynamically balanced state, where the movable object in the dynamically balanced state displaces or rolls on the first link (or it may be understood as that the movable object displaces or rolls relative to the first link). In all embodiments, the movable object in the dynamically balanced state is in a state in which the movable object displaces or rolls on the first link but remains on the first link without falling. All embodiments do not limit a speed and a direction of displacing or rolling of the movable object on the robotic arm. The first control information determined based on the first mapping relationship enables the robotic arm to perform at least one movement, so that the movable object is always stationary on the first link, or a relative position of the movable object and the first link is changed but the movable object does not fall off the robotic arm.

An example in which the movable object is a bottle is used, and the bottle is placed on the forearm of the robotic arm. After determining the first control information, the controller controls the at least one joint for controlling the first link based on the first control information. The bottle may be kept relatively stationary on the forearm of the robotic arm, and in this case, the robotic arm may remain relatively stationary or perform fine adjustment in the x or y direction. Alternatively, the bottle may roll on the forearm of the robotic arm, and the robotic arm may remain relatively stationary or perform fine adjustment in the x or y direction, so that the bottle does not fall off the robotic arm.

The controlling the robotic arm based on the first control information is a continuous process. In all embodiments, operation 160 may be implemented as follows:

controlling a movement of the first link at a second moment according to the first control information determined at a first moment;

controlling a movement of the first link at a third moment according to the first control information determined at the second moment; and

repeatedly performing the foregoing operations, until the first link enables the movable object to reach the balanced state on the first link at an $n^{th}$ moment.

In all embodiments, the first moment is earlier than the second moment, the second moment is earlier than the third moment, and the third moment is earlier than the $n^{th}$ moment, where n is a positive integer greater than 3. Further, a time interval between the first moment and the second moment is less than a preset interval, and the preset interval is predetermined based on response time of the robotic arm for the first control information. For example, the preset interval decreases as the response time of the robotic arm for the first control information decreases. For example, when the time interval between the first moment and the second moment is less than the preset interval, movement of the robotic arm is controlled according to the first control information obtained at the first moment, so that the movable object reaches the balanced state on the first link. Similarly, a time interval between the second moment and the third moment is less than the preset interval.

In all embodiments, the first control information for a next moment can be determined based on the first motion state at a current moment, and movement of the first link at the next moment is controlled based on the first control information determined at a current moment. Subsequently, the first control information at a moment after the next moment can be determined based on the first motion state at the next moment, and the first link is controlled to move based on the first control information. After the foregoing operations are repeatedly performed one or more times, the movement of the robotic arm at a moment can cause the movable object to reach the balanced state on the robotic arm, and in this case, the movement control of the robotic arm is stopped. In other words, after The first control information at the next moment is determined based on the first motion state at the current moment, the robotic arm moves, so that the first motion state at the next moment changes. Subsequently, a state of the movable object at the next moment may be determined. In this case, the next moment is reached, and the next moment becomes a new current moment. If the movable object reaches the balanced state on the robotic arm, the control of the robotic arm is stopped. If the movable object does not reach the balanced state, first motion state and expected motion state of a new next moment (relative to the new current moment) are continuously obtained, and the control of the robotic arm is repeatedly implemented, until the movement of the robotic arm is controlled to cause the movable object to reach the balanced state on the robotic arm.

In conclusion, all embodiments of present disclosure provide a new use method for a robotic arm, to keep the movable object balanced at any position on the first link without falling. Based on the first mapping relationship mapping the first motion state to the first control information, the first control information of the first link can be determined, to implement control of the first link.

Referring to the foregoing content, based on different modeling manners, the first mapping relationship is different. FIG. 7 is a flowchart of a robotic arm control method according to all embodiments of present disclosure. In other words, in the embodiments shown in FIG. 4, operation 140 may be implemented as operation 141 and operation 142, and operation 160 may be implemented as operation 161 and operation 162, to implement determining of the first mapping relationship in a 2D model. Operation 140 may alternatively be implemented as operation 143, and operation 160 may alternatively be implemented as operation 163, to determine the first mapping relationship in a 3D model. The first mapping relationship can be determined in only one manner, and cannot be determined in two manners at the same time. In other words, operation 141 cannot be performed together with operation 143, and operation 142 cannot be performed together with operation 143.

For example, all embodiments of present disclosure provide two methods for determining the first control information. Details are as follows:

I. In a 2D model, the first control information is determined based on the second mapping relationship and the third mapping relationship.

In all embodiments, the first motion state includes a second motion state associated with a pitch movement of the first link and a third motion state associated with a roll movement of the first link, the first mapping relationship includes the second mapping relationship and the third mapping relationship, and the first control information includes the second control information and the third control information. The second motion state is configured for indicating a motion state of a projection of the system in the second plane, that is, the second motion state associates with a pitch movement of the first link. The third motion state is configured for indicating a motion state of a projection of the system in the first plane, that is, the third motion state associated with the roll movement of the first link. In this case, operation 140 may be implemented as operation 141 and operation 142, and operation 160 may be implemented as operation 161 and operation 162. Details are as follows:

**Operation 141:** Determine a second control information based on the second mapping relationship and the second motion state.

**Operation 142:** Determine a third control information based on the third mapping relationship and the third motion state.

In all embodiments, the second mapping relationship is configured for mapping the second motion state to the second control information, the second control information is configured for controlling the pitch movement of the first link. The third mapping relationship is configured for mapping the third motion state to the third control information, the third control information is configured for controlling the roll movement of the first link. For example, the second mapping relationship is configured for mapping the second motion state in the second plane to the second control information, and the second control information is configured for controlling the first link to rotate around the first rotation axis (i.e., controlling the pitch movement of the first link); and the third mapping relationship is configured for mapping the third motion state in the first plane to the third control information, and the third control information is configured for controlling the first link to rotate around the second rotation axis (i.e., controlling the roll movement of the first link). For example, operation 141 may be performed before, after, or simultaneously with operation 142. A sequence of performing operation 141 and operation 142 is not limited in present disclosure.

**Operation 161:** Control the first link to rotate around the first rotation axis based on the second control information.

**Operation 162:** Control the first link to rotate around the second rotation axis based on the third control information.

For example, the first plane is configured for indicating a two-dimensional plane constructed by the second direction and the perpendicular direction (which may alternatively be understood as an XOZ plane), and the second plane is configured for indicating another two-dimensional plane constructed by the second direction and the perpendicular direction (which may alternatively be understood as a YOZ plane). For example, operation 161 may be performed before, after, or simultaneously with operation 162. A sequence of performing operation 161 and operation 162 is not limited in present disclosure. Referring to FIG. 6, the first direction, the second direction, and the perpendicular direction are respectively the y, x, and z directions, the first plane is the XOZ plane, and the second plane is the YOZ plane. After the system is constructed based on the first link and the movable object, a three-dimensional space may be defined based on the first direction, the second direction, and the perpendicular direction. The three-dimensional space includes the first plane and the second plane.

Referring to the foregoing content, because the first link can rotate in the x or y direction, based on 2D modeling, the first mapping relationship may be respectively constructed in the XOZ plane and the YOZ plane, to respectively implement control in the x or y direction. In all embodiments, the second motion state comprises a first roll angle of the first link, the second control information comprises a first torque for controlling the pitch movement of the first link. For example, the second motion state includes a first rotation angle (i.e., the first pitch angle) of the first link in the second plane (which may be understood as the YOZ plane), the second control information includes a first torque applied in a pitch direction in which the first link rotates around the first rotation axis (which may be understood as the x-axis). In this case, operation 141 may be implemented as follows: determining the first torque based on the second mapping relationship and the first rotation angle. In other words, the first torque is determined based on the second mapping relationship and the first roll angle. The first rotation angle is configured for indicating an angle by which the first link rotates relative to a world coordinate system in the second plane. For construction of the world coordinate system, refer to FIG. 6. The world coordinate system is constructed based on that the robotic arm is in an initial posture, and the robotic arm in the initial posture remains parallel to the ground.

For example, the first roll angle may be represented as $\alpha$, the first torque may be represented as $\tau_1$, and the second mapping relationship may be represented as $f_1$.

In the YOZ plane, the first motion state and physical information of the system may be determined based on the system including the first link and the movable object. The second motion state may include a distance (which may be represented as $s$) in the first direction between the center of the movable object and the center of the joint that controls the first link to rotate. Subsequently, a first kinetic energy (which may be represented as $T$) and a first potential energy (which may be represented as $U$) in the YOZ plane may be determined, to construct a first Euler-Lagrange equation in the YOZ plane. The first Euler-Lagrange equation constructed based on the YOZ plane may be represented as $L = T - U$. Subsequently, description equations of a dynamical model in different degrees of freedom may be obtained based on the first Euler-Lagrange equation. In other words, a plurality of dynamical equations may be obtained based on the first Euler-Lagrange equation, and each dynamical equation is constructed based on a degree of freedom. For example, in the YOZ plane, a first dynamic equation for a first degree of freedom (which may be understood as $\alpha$ degree of freedom) and a second dynamic equation for a second degree of freedom (which may be understood as s degree of freedom) may be obtained based on the first Euler-Lagrange equation. Based on this, the second mapping relationship may be obtained through simple operation of the first dynamic equation and the second dynamic equation. Similar to the construction of the second mapping relationship, construction of the second mapping relationship is also based on the first Euler-Lagrange equation in the YOZ plane, conforms to constraint of the system, and can accurately reflect the second mapping relationship.

In all embodiments, the third motion state includes the included angle between the movable object and the horizontal plane, and the third control information includes the second torque applied in the roll direction in which the first link rotates around the second rotation axis (which may be understood as the y-axis). In other words, the second torque is used for controlling the roll movement of the first link. In this case, operation 142 may be implemented as follows: determining the second torque based on the third mapping relationship and the included angle. The included angle is configured for indicating an angle by which the movable object rotates in the first plane relative to a horizontal plane of the world coordinate system. In other words, the included angle is a pitch angle of the movable object. For the construction of the world coordinate system, refer to FIG. 6. The world coordinate system is constructed based on that the robotic arm is in an initial posture, and the robotic arm in the initial posture remains parallel to the ground.

For example, the second rotation angle may be represented as $\varphi$, and the second torque may be represented as $\tau_2$, and the third mapping relationship may be represented as $f_2$. In the XOZ plane, the first motion state and physical information may be determined based on the system. The third motion state may include the included angle (which may be represented as $\theta$) of the movable object in the XOZ plane. Subsequently, a second kinetic energy (which may be represented as $T$) and a second potential energy (which may be represented as $U$) in the XOZ plane may be determined, to construct a second Euler-Lagrange equation in the XOZ plane. The second Euler-Lagrange equation constructed based on the XOZ plane may be represented as $L = T - U$.

Subsequently, description equations of a dynamical model in different degrees of freedom may be obtained based on the second Euler-Lagrange equation. In other words, a plurality of dynamical equations may be obtained based on the second Euler-Lagrange equation, and each dynamical equation is constructed based on a degree of freedom. For example, in the XOZ plane, a third dynamic equation for a third degree of freedom (which may be understood as $\varphi$ degree of freedom) and a fourth dynamic equation for a fourth degree of freedom (which may be understood as $\theta$ degree of freedom) may be obtained based on the second Euler-Lagrange equation. In other words, based on the third motion state, it is determined that a second kinetic energy of the system and a second potential energy of the system associated with a roll movement of the first link. Based on this, the third mapping relationship may be obtained through simple operation of the third dynamic equation and the fourth dynamic equation (for example, in a manner of substituting the fourth dynamic equation into the third dynamic equation, which is described in detail below according to all embodiments). Construction of the third mapping relationship is based on the second Euler-Lagrange equation in the XOZ plane, and conforms to constraint of the system, and can accurately reflect the third mapping relationship. After the third mapping relationship is determined, if obtaining the third motion state, the controller may determine the third control information based on the third mapping relationship, to implement roll movement of the first link.

After the third mapping relationship is determined, if obtaining the third motion state, the controller may determine the third control information based on the third mapping relationship, to implement roll movement of the first link.

II. In a 3D model, the first control information is determined based on the first mapping relationship.

In all embodiments, operation 140 may be implemented as operation 143, and operation 160 may be implemented as operation 163. Details are as follows:

**Operation 143:** Determine the first control information based on the first mapping relationship and the first motion state. The first mapping relationship is configured for mapping the first motion state in a three-dimensional space to the first control information, and the first control information is configured for controlling a roll movement and a pitch movement of the first link.

For example, the first mapping relationship is configured for mapping the first motion state in a three-dimensional space to the first control information, and the first control information is configured for controlling the first link to rotate in the three-dimensional space.

**Operation 163:** Control the first link to rotate in the three-dimensional space based on the first control information.

For example, the three-dimensional space is defined by the first direction, the second direction, and the perpendicular direction. The first plane and the second plane are formed in the three-dimensional space, the first plane is configured for indicating a two-dimensional plane constructed by the second direction and the perpendicular direction, and the second plane is configured for indicating another two-dimensional plane constructed by the first direction and the perpendicular direction. Referring to FIG. 6, the three-dimensional space can be constructed by using x, y, and z directions, and the three-dimensional space includes the first plane (namely, the XOZ plane) and the second plane (namely, the YOZ plane). There are two coordinate systems in the three-dimensional space. One is a coordinate system shown in FIG. 6, and the other is a world coordinate system constructed based that the robotic arm is in an initial posture.

In all embodiments, the first motion state includes: a distance in the first direction between the center of the movable object and the center of the joint that controls the first link to rotate (namely, $s$), and an included angle between the movable object and a horizontal plane (namely, $\theta$) of the movable object in the first plane (i.e., the pitch angle of the movable object). The first mapping relationship includes a first sub-mapping relationship and a second sub-mapping relationship. The first mapping relationship comprises: a first sub-mapping relationship for mapping the distance to the first torque, and a second sub-mapping relationship for mapping the included angle to the second torque. The first torque applied in the pitch direction in which the first link rotates around the first rotation axis, and the second torque applied in the roll direction in which the first link rotates around the second rotation axis. In all embodiments, operation 143 may be implemented as follows: determining the first torque based on the first sub-mapping relationship and the distance; and determining the second torque based on the second sub-mapping relationship and the included angle. Operation 163 may be implemented as follows: controlling the first link to rotate around the first rotation axis based on the first torque; and controlling the first link to rotate around the second rotation axis based on the second torque.

Similar to the case of the 2D model, considering that the first link rotates in the x or y direction, in the 3D model, the first mapping relationship still needs to be respectively constructed based on the three-dimensional space. The first mapping relationship includes two sub-mapping relationships, which are respectively configured for determining the first torque and the second torque, to implement control of the robotic arm in the x or y direction. For example, the first control moment is represented as $\tau_x$, and the first sub-mapping relationship included in the first mapping relationship may be represented as $f_{31}$; and the second torque is represented as $\tau_y$, and the second sub-mapping relationship included in the first mapping relationship may be represented as $f_{32}$.

Similar to the 2D model, in the three-dimensional space, the first motion state and physical information may be determined based on the system of the robotic arm and the movable object. Subsequently, a third kinetic energy of the system and a third potential energy of the system in the three-dimensional space may be determined, to construct a third Euler-Lagrange equation in the three-dimensional space. Based on this, description equations of a dynamical model in different degrees of freedom may be obtained based on the third Euler-Lagrange equation. The first mapping relationship may be obtained based on simple operation of the description equations. Construction of the first mapping relationship is based on the third Euler-Lagrange equation in the three-dimensional space, conforms to constraint of the system, and can accurately reflect the first mapping relationship between the first motion state and the first control information.

After the first mapping relationship is determined, if obtaining the first motion state, the controller may determine the first control information based on the first mapping relationship, to implement movement of the robotic arm on the first rotation axis and the second rotation axis.

In conclusion, in the robotic arm control method provided in all embodiments of present disclosure, two implementations of determining the first control information are provided, and the first control information for controlling the robotic arm may be respectively determined in the 2D model and the 3D model.

When a 2D model is constructed, two controllers may be disposed in the robotic arm, and corresponding control information is respectively determined based on the second mapping relationship and the third mapping relationship, or one controller may be disposed to determine two pieces of control information. When a 3D model is constructed, one controller may be disposed in the robotic arm, to determine the first control information based on the first mapping relationship. A quantity of controllers is not limited in present disclosure. An implementation of determining the first control information based on the first mapping relationship and the first motion state falls within the protection scope of present disclosure, and details are not repeated herein.

Referring to the foregoing content, to determine the first control information, the first mapping relationship needs to be constructed. FIG. 8 is a flowchart of a robotic arm control method according to all embodiments of present disclosure. For example, based on the embodiments shown in FIG. 4, the method further includes operation 130. Details are as follows:

In all embodiments, the operation 130 may include constructing the first mapping relationship based on the first motion state and physical information of the system.

For example, the first mapping relationship is configured for mapping the first motion state in a two-dimensional plane or in a three-dimensional space to the first control information. After a 2D/3D model is constructed, the first motion state and/or the physical information of the system may be obtained.

In all embodiments, the first motion state includes at least one piece of the following information: rotational inertia of the robotic arm, rotational inertia of the movable object, a first rotation angle of the robotic arm in a first plane, an included angle between the robotic arm and a horizontal plane constructed by a first direction and a second direction, a distance in the first direction between a center of the movable object and a center of a center that controls the robotic arm to rotate, and a second rotation angle of the movable object in the first plane. In all embodiments, the physical information includes at least one piece of the following information: mass of the robotic arm, a cross-sectional radius of the robotic arm, a length of a rigid body for balancing the movable object, mass of the movable object, a cross-sectional radius of the movable object, a position of a center of mass of the movable object, and a horizontal distance that is in an extension direction of the movable object and that is between a contact point between the movable object and the robotic arm and the center of mass of the movable object.

Referring to FIG. 6, the first direction, the second direction, and the perpendicular direction are respectively the x, y, and z directions, the first plane is the XOZ plane, and the second plane is the YOZ plane. For example, in the XOZ plane, the following motion state may be determined: the an included angle between the movable object and a horizontal plane (which may be represented as $\theta$) of the movable object in the second plane, the roll angle (which may be represented as $\varphi$) of the first link in the second plane, and rotational inertia of the first link (which may be represented as $I_a$), and rotational inertia of the movable object (which may be represented as $I_b$). In addition, the following physical information may be determined: the distance (which may be represented as d) that is in the extension direction of the movable object and that is between the contact point between the movable object and the first link and the center of mass of the movable object, the cross-sectional radius of the first link (which may be represented as $r_a$), and the mass of the first link (which may be represented as $m_a$). In the YOZ plane, the following motion state may be determined: the included angle between the first link and the horizontal plane (which may be represented as $\alpha$), the rotational inertia of the first link (which may be represented as $I_a$), and the rotational inertia of the movable object (which may be represented as $I_b$). In addition, the following physical information may be determined: the distance in the first direction between the center of the movable object and the center of the joint that controls the first link to rotate (which may be represented as s), the cross-sectional radius of the first link (which may be represented as $r_a$), the cross-sectional radius of the movable object (which may be represented as $r_b$), and the mass of the first link (which may be represented as $m_a$).

In the three-dimensional space, the following motion state may be determined: rotational inertia of the first link in a third direction and a fourth direction (which may be represented as $I_{ax}$ and $I_{ay}$), and rotational inertia of the movable object in the third direction and the fourth direction (which may be represented as $I_{bx}$ and $I_{by}$). In addition, the following physical information may be determined: a position of a center of mass of the movable object (which may be represented as C). The third direction and the fourth direction are an x direction and a y direction in a first link coordinate system constructed based on the first link. The construction of the robotic arm is shown in FIG. 6. Coordinate axes of the world coordinate system constructed based on that the first link is in the initial posture are fixed, and coordinate axes of the first link coordinate system change with the movement of the first link.

Referring to the foregoing content disclosed herein, regardless of the two-dimensional plane or the three-dimensional space, after the first motion state and the physical information of the system are obtained, the first mapping relationship in the corresponding model may be constructed. Constructing the first mapping relationship provided in operation 130 in all embodiments may be performed before, after, or simultaneously with operation 120, which is not limited in present disclosure. The first mapping relationship used in determining The first control information in operation 140 in all embodiments is obtained through construction in operation 130. In other words, the first mapping relationship obtained through construction in operation 130 is configured for controlling the movement of the robotic arm in a subsequent operation of determining the first control information.

In all embodiments, to obtain the first motion state, operation 120 may be implemented as follows: obtaining the first motion state from the system based on a visual sensor; or obtaining the first motion state from the system based on the visual sensor and a tactile sensor. In the foregoing operation, the system needs to be constructed first, and reference may be made to the foregoing content. Details are not repeated herein. For example, the visual sensor is disposed on the robotic arm, or disposed outside the robotic arm; and the tactile sensor is laid on a housing of the robotic arm, to be used as electronic skin of the robotic arm. For example, a joint motor encoder is mounted on a joint motor of the robotic arm, to feed back information about angles, angular velocities, and current of joints, and the information can be configured for estimating a status of the robotic arm. For another example, the tactile sensor is laid on a finger, a palm, and a link of the robotic arm, to obtain feedback information of the movable object.

In all embodiments, the first motion state may be obtained through a proximity sensor. The proximity sensor is configured to send a signal when two objects approach. When the movable object approaches the proximity sensor, the first motion state can be obtained. For example, for that the first motion state includes the distance in the x direction between the center of the movable object and the center of the joint that controls the robotic arm to rotate, the proximity sensor is disposed on the movable object and the joint that controls the robotic arm to rotate. The signal sent by the proximity sensor is configured for indicating the distance in the x direction between the center of the movable object and the center of the joint that controls the robotic arm to rotate, to obtain the first motion state.

For example, to obtain the first motion state, present disclosure provides the three following implementations for selection.

Implementation 1: motion state recognition of full degrees of freedom of the movable object based on visual perception.

The robotic arm of 7 degrees of freedom shown in FIG. 1 to FIG. 3 is used as an example, the motion state recognition of full degrees of freedom of the movable object may be obtained through the visual sensor, to determine a relative position relationship between the movable object and the robotic arm, to determine the first motion state. For example, image information is obtained through the visual sensor, and image processing is performed, to determine the motion state of the movable object on the robotic arm, such as position information on the x, y, or z axis and a motion state in the roll or pitch direction that are obtained based on image processing.

In all embodiments, operation time of the posture recognition is about 100 milliseconds, that is, 10 Hz.

Implementation 2: performing data image processing based on the visual sensor.

In all embodiments, lightweight data image processing manner may be used to determine a position of the movable object in the system. For example, a camera is disposed on the robotic arm or in an external environment, to obtain image information of the robotic arm and the movable object. The image information is configured for showing that the movable object is placed on the robotic arm. Subsequently, the image information is processed to obtain an image processing result. For example, after the image information is obtained, cluster analysis is performed based on different colors between the movable object and objects in an environment, to determine a geometric center of the movable object, and a position of the geometric center and a position of a center of mass in the system can be determined subsequently. Based on this, with reference to the related information of the robotic arm, the first motion state can be obtained, for example, a contact position is determined based on the geometric center of the movable object. In all embodiments, an operation speed of the lightweight calculation based on this implementation is fast, and operation time is about 10 milliseconds, that is, 10 Hz.

In all embodiments, obtaining the first motion state through the visual sensor may be implemented as follows: obtaining the image information through the visual sensor, where the image information is configured for presenting that the movable object is placed on the robotic arm; processing the image information to obtain the image processing result; and determining the first motion state based on the image processing result.

Alternatively, in all embodiments, obtaining the first motion state through the visual sensor and the tactile sensor may be implemented as follows: determining first information of the movable object in a second direction through the visual sensor; determining second information of the movable object in a first direction through the tactile sensor; and performing fusion processing on the first information and the second information, to obtain the first motion state.

Referring to FIG. 6, after the coordinate system is constructed based on the robotic arm, there are the first direction (which may be understood as the x direction) and the second direction (which may be understood as the y direction), and the movable object can perform description of relative positions and force interaction with the robotic arm in both the first and second directions. In the foregoing implementation, different sensors obtain descriptions in corresponding direction, to form corresponding first information and second information.

For example, the first information is the position of the geometric center and the position of the center of mass of the movable object that are obtained through image processing by the visual sensor; and the second information is a specific position of the movable object on the robotic arm obtained through the tactile sensor. Subsequently, based on fusing of the first information and the second information, the first motion state may be determined, for example, the contact position between the movable object and the robotic arm.

For related content of determining the first information through the visual sensor, refer to the foregoing content. Details are not repeated herein. Determining the second information through the tactile sensor and fusion processing are described below.

Implementation 3: performing data fusion processing through the visual sensor and the tactile sensor.

In all embodiments, the first motion state may alternatively be obtained through the visual sensor and the tactile sensor. For processing of the visual sensor, refer to the foregoing content. Processing of the tactile sensor is specifically as follows.

Based on the foregoing content, when the lightweight data image processing manner is used, a large error may be caused in a depth direction (in other words, a direction of the y-axis shown in FIG. 6) of the camera. Based on this, the tactile sensor may be used for compensation. For example, the tactile sensor is laid on the housing of the robotic arm, to collect a corresponding tactile signal when the movable object is placed on the robotic arm. Based on this, a specific position of the movable object in the x direction on the robotic arm can be accurately obtained.

The tactile sensor provides a position of the movable object in the y direction and a pitch angle posture. In addition, with reference to lightweight image processing of the visual sensor, compared with prior image data, the specific position of the movable object in the x direction on the robotic arm can be determined.

In all embodiments, operation time of the tactile sensor based on this implementation is about 10 milliseconds, that is, 100 Hz. Referring to the foregoing content, comparison between the three implementations is provided, as shown in the table below:

| Scheme | Operation period | Linear error | Angular error |
|---|---|---|---|
| Implementation 1 | 100 ms | 1 to 2 cm | 5 to 10 degrees |
| Implementation 2 | 10 ms | 1 cm | 5 degrees |
| Implementation 3 | 10 ms | 1 cm | 5 degrees |

In Implementation 1, for determining the position of the movable object on the robotic arm, there is a linear error of 1 to 2 centimeters and an angular error of 5 to 10 degrees, that is, the obtained first motion state has a specific linear error and angular error. Similarly, in Implementations 2 and 3, there are also specific errors. Further, Implementation 3 is an improved implementation based on Implementation 2, which can overcome a disadvantage of inaccurate measurement of the center of mass in the direction of the y-axis in Implementation 2, so that an error of the obtained first motion state is smaller.

If the robotic arm control method provided in present disclosure is adopted, a proper implementation may be selected based on an actual requirement, to obtain the first motion state. This is not limited in present disclosure.

Referring to the foregoing content, obtaining the first motion state based on the visual sensor and the tactile sensor may be implemented as: determining the first information of the movable object in the first direction through the visual sensor; determining the second information of the movable object in the second direction through the tactile sensor; and performing the fusion processing on the first information and the second information, to obtain the first motion state.

In all embodiments, determining of the second information may be specifically implemented as: determining position information of contact point between the movable object and the robotic arm relative to the robotic arm through the tactile sensor.

The position information determined based on this includes at least position coordinates of the contact position between the movable object and the robotic arm. For related content of obtaining the position information by the tactile sensor, refer to the foregoing content. Details are not repeated herein. In all embodiments, the tactile sensor is laid on a housing of the robotic arm. The tactile sensor is configured to obtain related information of the contact position between the movable object and the robotic arm, including the position coordinates and moment information of the contact position.

Referring to the foregoing content, the first information is data of visual perception, the second information is data of tactile perception, and the two pieces of data may be fused. In all embodiments, the fusion processing may use any one or more of the following algorithms: a Kalman filtering (KF) algorithm, an extended Kalman filtering (EKF) algorithm, and a particle filter (PF) algorithm.

There are a plurality of implementations of data fusion processing. The foregoing content is merely an exemplary example, and does not constitute a limitation to present disclosure. In addition, as the fusion processing manner is updated, fusion processing that occurs after present disclosure is also applicable to present disclosure, that is, a result of the fusion processing does not constitute a limitation on the robotic arm control method provided in present disclosure.

In conclusion, according to the robotic arm control method provided in all embodiments of present disclosure, a manner of construction of a mapping relationship is provided. Based on first motion state and physical information of a system, the first mapping relationship between first motion state in a two-dimensional plane or a three-dimensional space and control information can be determined, thereby determining the first control information, to control the robotic arm, and ensure that a movable object is in a balanced state on the robotic arm.

Based on the foregoing content, determining tThe first control information based on the second mapping relationship and the third mapping relationship corresponds to a 2D modeling manner; and determining The first control information based on the first mapping relationship corresponds to a 3D modeling manner. It can be seen that there are two parallel modeling manners, namely, 2D modeling or 3D modeling. In different modeling, the construction of the first mapping relationship is different.

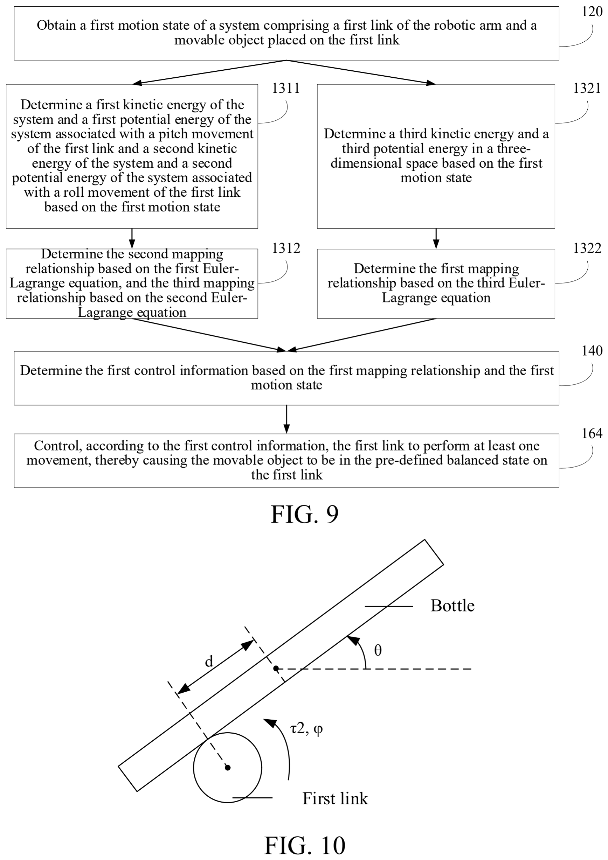

FIG. 9 is a flowchart of a robotic arm control method according to all embodiments of present disclosure. In other words, in the embodiments shown in FIG. 4, operation 130 may be implemented as operation 1311 and operation 1312, or operation 130 may be implemented as operation 1321 and operation 1322, and operation 160 may be implemented as operation 164. One of operation 1311 and operation 1312 may be selected to be performed, but operation 1311 and operation 1312 cannot be performed at the same time.

All embodiments of present disclosure provide two implementations of construction of the first mapping relationship, which are specifically as follows:

I. In a 2D model, the second mapping relationship and the third mapping relationship are constructed.

II. In a 3D model, the first mapping relationship is constructed.

The foregoing two implementations of construction of the first mapping relationship and the foregoing solutions of determining the first control information may be in a one-to-one correspondence. For example, that in the 2D model, the second mapping relationship and the third mapping relationship are constructed may be combined with the foregoing technical solution of determining the first control information based on the second mapping relationship and the third mapping relationship in the 2D model into a new embodiment for joint implementation. Similarly, that in the 3D model, the first mapping relationship is constructed may be combined with the foregoing technical solution of determining the first control information based on the first mapping relationship in the 3D model into a new embodiment for joint implementation. This is not limited in present disclosure. In the context, the second mapping relationship, the third mapping relationship, and the first mapping relationship are not fully introduced in the above due to space limitations. Reference may be made to all embodiments of the implementations of construction of the first mapping relationship and obtaining the first mapping relationship, which is not limited in present disclosure.

**The foregoing two implementations are specifically introduced as follows.**

I. In a 2D model, the second mapping relationship and the third mapping relationship are constructed.

In all embodiments, the first mapping relationship includes the second mapping relationship and the third mapping relationship. In this case, operation 130 may be implemented as operation 1311 and operation 1312. Details are as follows:

**Operation 1311:** Determine a first kinetic energy of the system and a first potential energy of the system associated with a pitch movement of the first link and a second kinetic energy of the system and a second potential energy of the system associated with a roll movement of the first link based on the first motion state. The first kinetic energy and the first potential energy are configured for constructing a first Euler-Lagrange equation, the second kinetic energy and the second potential energy are configured for constructing a second Euler-Lagrange equation.

**Operation 1312:** Determine the second mapping relationship based on the first Euler-Lagrange equation, and the third mapping relationship based on the second Euler-Lagrange equation.

Wherein the second mapping relationship is configured for mapping a second motion state associated with a pitch movement of the first link to a second control information for controlling the pitch movement of the first link, the third mapping relationship is configured for mapping a third motion state associated with a roll movement of the first link to a third control information for controlling the roll movement of the first link. For example, the second mapping relationship is configured for mapping the second motion state in the second plane to the second control information, the third mapping relationship is configured for mapping the third motion state in the first plane and third control information.

The first mapping relationship is mainly determined based on the first and second Euler-Lagrange equations.

For example, a partial derivative is solved for each degree of freedom in the kinetic energy and the potential energy, to obtain different partial derivatives. A plurality of dynamical equations may be then determined based on the Euler-Lagrange equation, and each dynamical equation is constructed based on a degree of freedom. Finally, the second mapping relationship and the third mapping relationship are determined based on at least one dynamical equation.

Referring to the foregoing content, in all embodiments, the second mapping relationship may be determined as follows: obtaining, based on the first Euler-Lagrange equation, a first dynamic equation for a first degree of freedom and a second dynamic equation for a second degree of freedom; and determining the second mapping relationship based on the first dynamic equation and the second dynamic equation.

The first degree of freedom being associated with a pitch movement of the first link, the first dynamic equation being configured for describing a drive constraint associated with a pitch movement of the first link, the second degree of freedom being a degree of freedom associated with a movement of the movable object in a first direction being an axial direction of the first link, and the second dynamic equation being configured for describing a drive constraint associated with the movement of the movable object in the first direction.

Referring to the foregoing content, in all embodiments, the third mapping relationship may be determined as follows: obtaining, based on the second Euler-Lagrange equation, a third dynamic equation for a third degree of freedom and a fourth dynamic equation for a fourth degree of freedom; and determining the third mapping relationship based on the third dynamic equation and the fourth dynamic equation.

The third degree of freedom being a degree of freedom associated with the roll movement of the first link, the third dynamic equation being configured for describing a drive constraint on the first link in the third degree of freedom, the fourth degree of freedom being a degree of freedom associated with an included angle between the movable object (502) and a horizontal plane, and the fourth dynamic equation being configured for describing a drive constraint on the movable object in the fourth degree of freedom..

Referring to FIG. 6, it is considered that the robotic arm is located in the world coordinate system, and the world coordinate system is constructed based on that the robotic arm is in the initial state. The direction of the extension line of the robotic arm is a positive direction of the y-axis; in the initial state, a direction perpendicular to the y-axis and parallel to the ground is the direction of the x-axis; when standing in the same direction with the robotic arm, a direction of the right hand is a positive direction of the x-axis; a direction opposite to the gravity is vertical upward, a direction perpendicular to the ground is the z axis; and a space rectangular coordinate system, namely, the world coordinate system, is constructed based on this.

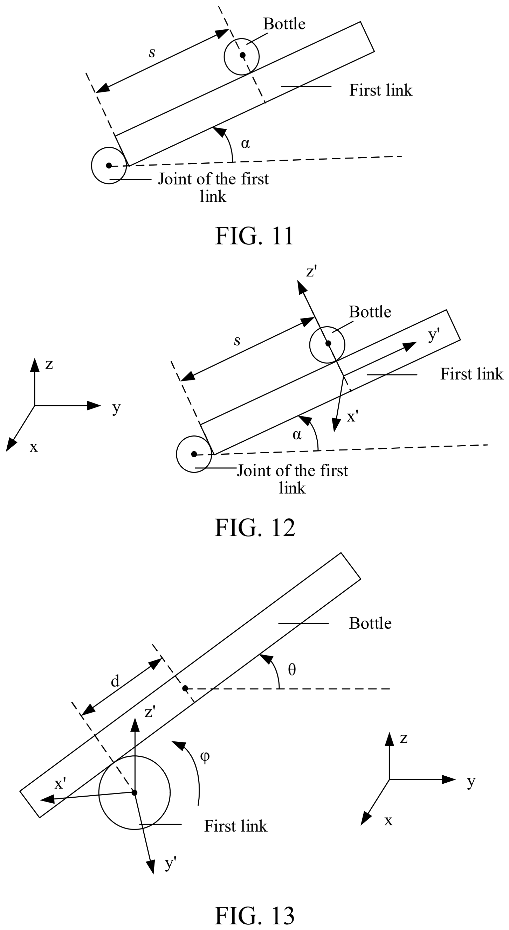

An example in which the second plane is the YOZ plane, and the bottle is placed on the forearm of the robotic arm is used, and a 2D model in the YOZ plane may be simplified as FIG. 11. A circle at the lower left corner is configured for representing a joint rotating around the forearm of the robotic arm, a rectangle connected thereto is a cross section of the forearm, an included angle between the cross section and the horizontal direction of the world coordinate system is $\alpha$, that is, an included angle between the first link and a horizontal plane, and a circle located on the rectangle is a cross section of the bottle. Similarly, assuming that the bottle is perpendicular to the first link, to simplify model description of the bottle, changes of a shape and a cross-sectional area of a head and a bottom of the bottle are ignored, the bottle is considered as a homogeneous rigid body, and a position of the bottle is evaluated by using a center of mass of the bottle.

Based on this, the following motion state may be determined: In the YOZ plane, the following motion state may be determined: the included angle between the first link and the horizontal plane (which may be represented as $\alpha$), the rotational inertia of the first link (which may be represented as $I_a$), and the rotational inertia of the movable object (which may be represented as $I_b$). In addition, the following physical information may be determined: the distance in the first direction between the center of the movable object and the center of the joint that controls the first link to rotate (which may be represented as s), the cross-sectional radius of the first link (which may be represented as $r_a$), the cross-sectional radius of the movable object (which may be represented as $r_b$), and the mass of the first link (which may be represented as $m_a$).

For example, $\tau_1$ is configured for representing the first torque, and may also be understood as a first torque applied on a degree of freedom of a forearm joint.

Based on this, a square of the motion speed (which may be represented as v) of the bottle in the world coordinate system, and the rotational angular velocity (which may be represented as $\omega$) of the bottle may be obtained. Details are as follows:

$$v^2 = \dot{s}^2 + (s\dot{\alpha})^2$$

$$\omega = \frac{\dot{s}}{r_b} + \dot{\alpha}$$

$\dot{s}$ and $\dot{\alpha}$ are respectively configured for indicating derivatives of s and $\alpha$.

Based on the first Euler-Lagrange equation, a first kinetic energy and a first potential energy of all rigid bodies in the system in the YOZ plane need to be respectively solved. After the first motion state and the physical information are determined, the first kinetic energy and the first potential energy in the YOZ plane need to be determined.

For example, a sum of the kinetic energy of all rigid bodies in the system may be represented as follows:

$$T = \frac{1}{2} I_b \cdot (\frac{\dot{s}}{r_b} + \dot{\alpha})^2 + \frac{1}{2} m_b (\dot{s}^2 + s^2 \dot{\alpha}^2) + \frac{1}{2} I_a \dot{\alpha}^2$$

$$U = \frac{1}{2} m_a g \cdot l_a \sin \alpha + m_b g s \cdot \sin \alpha$$

T represents the first kinetic energy, U represents the first potential energy, $v^2$ has been described above, $s$ is configured for indicating the distance in the first direction between the center of the movable object and the center of the joint that controls the first link to rotate, $r_b$ is configured for indicating the cross-sectional radius of the first link, $m_a$ is configured for indicating mass of the first link, $m_b$ is configured for indicating mass of the movable object, $I_a$ is configured for indicating the rotational inertia of the first link, $I_b$ is configured for indicating rotational inertia of the movable object, $l_a$ is configured for indicating a length of the first link, and $g$ is configured for indicating the gravitational acceleration. Based on this, the kinetic energy can be partialized respectively for each degree of freedom (namely, $s$ and $\alpha$) and a derivative thereof (namely, $\dot{s}$ and $\dot{\alpha}$) in an extended coordinate system, to obtain the following formulas:

$$\frac{\partial T}{\partial \dot{s}} = \frac{I_b}{r_b} (\frac{\dot{s}}{r_b} + \dot{\alpha}) + m_b \dot{s}$$

$$\frac{\partial T}{\partial \dot{\alpha}} = I_b (\frac{\dot{s}}{r_b} + \dot{\alpha}) + (m_b s^2 + I_a) \dot{\alpha}$$

$$\frac{\partial U}{\partial s} = m_b g \sin \alpha$$

$$\frac{\partial U}{\partial \alpha} = (\frac{1}{2} m_a g l_a + m_b g s) \cos \alpha$$

Subsequently, for $\frac{\partial T}{\partial \dot{s}}$ and $\frac{\partial T}{\partial \dot{\alpha}}$, time is respectively derived, to obtain the following formulas:

$$\frac{d}{dt}(\frac{\partial T}{\partial \dot{s}}) = (\frac{I_b}{r_b^2} + m_b) \ddot{s} + \frac{I_b}{r_b} \ddot{\alpha}$$

$$\frac{d}{dt}\left(\frac{\partial T}{\partial \dot{\alpha}}\right) = \frac{I_b}{r_b} \ddot{s} + (I_b + I_a + m_b s^2) \ddot{\alpha} + 2 m_b s \dot{s} \dot{\alpha}$$

$$\frac{\partial T}{\partial s} = m_b \dot{\alpha}^2 s$$

$$\frac{\partial T}{\partial \alpha} = 0.$$

Subsequently, the first dynamic equation and the second dynamic equation may be obtained based on the first Euler-Lagrange equation. A specific calculation process is as follows.

$$\left(\frac{I_b}{r_b^2} + m_b\right)\ddot{s} + \frac{I_b}{r_b}\ddot{\alpha} - m_b s\dot{\alpha}^2 + m_b g\sin\alpha = 0 \qquad \text{(Formula B1)}$$

$$\frac{I_b}{r_b}\ddot{s} + (I_b + Ia + m_b s^2)\ddot{\alpha} + 2m_b s\dot{s}\dot{\alpha} + \left(\frac{1}{2}m_a g l_a + m_b g s\right)\cos\alpha = \tau_2 \qquad \text{(Formula B2)}.$$

The first line is configured for indicating a second dynamical equation at s degree of freedom (namely, Formula B1). Because at the degree of freedom, actuation is lacked, actual input moment on the right side of the equation is 0. The second line is configured for indicating a first dynamical equation at $\alpha$ degree of freedom (namely, Formula B2), and actuation at the degree of freedom is a first torque $\tau_1$ of a motor.

Based on the second dynamic equation (namely, Formula B1), $\ddot{s}$ may be obtained, an $\ddot{s}$ is substituted into the first dynamic equation (namely, Formula B2), to determine the second mapping relationship $f_1$. After the second mapping relationship is determined, the PID controller may obtain the expected value of $\ddot{\alpha}$.

$$(\ddot{\alpha}) = -k_p(\alpha) - k_d(\dot{\alpha})$$

$k_p$ and $k_d$ are respectively a pre-set proportional control parameter and a pre-set differential control parameter, and the two parameters may be adjusted based on results of a plurality of experiments.

$\tau_1$ may be then determined based on the third mapping relationship and the expected value of $\ddot{\alpha}$, to control the first link to rotate around the first rotation axis.

An example in which the first plane is the XOZ plane, the movable object is a bottle, and the bottle is placed on the forearm of the robotic arm is used, and a 2D model in the XOZ plane may be simplified as FIG. 10. The lower circle represents a cross section of the forearm of the robotic arm, and the rectangle represents a cross section of the bottle. To simplify model description of the bottle, changes of a shape and a cross-sectional area of a head and a bottom of the bottle are ignored, the bottle is considered as a homogeneous rigid body, and a position of the bottle is evaluated by using a center of mass of the bottle. In addition, the bottle and the forearm of the robotic arm are approximately perpendicularly disposed. Therefore, the cross section of the bottle is a rectangle.

Based on this, the following motion state may be determined: an included angle between the movable object and a horizontal plane (which may be represented as $\theta$) of the movable object in the second plane, the roll angle (which may be represented as $\varphi$) of the first link in the second plane, and rotational inertia of the first link (which may be represented as $I_a$), and rotational inertia of the movable object (which may be represented as $I_b$). In addition, the following physical information may be determined: the distance (which may be represented as d) that is in the extension direction of the movable object and that is between the contact point between the movable object and the first link and the center of mass of the movable object, the cross-sectional radius of the first link (which may be represented as $r_a$), and the mass of the first link (which may be represented as $m_a$).

For example, $\tau_2$ is configured for representing the second torque, and may also be understood as a second torque applied on a degree of freedom of a forearm joint.

Based on this, a relationship between physical quantities can be obtained, which is specifically as follows:

$$d = \theta r_a - \varphi r_a;$$

and

$$\dot{d} = \dot{\theta} r_a - \dot{\varphi} r_a.$$

$\dot{d}, \dot{\theta}$, and $\dot{\varphi}$ are respectively configured for indicating derivatives of d, $\theta$, and $\varphi$.

For example, a square of a motion speed (represented as v) of the bottle may be determined based on a system. Details are as follows:

$$v^2 = \dot{d}^2 + (d\dot{\theta})^2 = r_a^2\dot{\theta}^2 + r_a^2\dot{\varphi}^2 - 2r_a^2\dot{\theta}\dot{\varphi} + r_a^2\theta^2\dot{\theta}^2 + r_a^2\varphi^2\dot{\theta}^2 - 2r_a^2\theta\varphi\dot{\theta}^2.$$

Based on the second Euler-Lagrange equation, a second kinetic energy and a second potential energy of all rigid bodies in a system in the XOZ plane need to be respectively solved. After the first motion state and the physical information are determined, the second kinetic energy and the second potential energy in the XOZ plane need to be determined.

For example, a sum of the kinetic energy of all rigid bodies in the system may be represented as follows:

$$T = \frac{1}{2} m_b v^2 + \frac{1}{2} I_b \dot{\theta}^2 + \frac{1}{2} I_a \dot{\varphi}^2$$

$$U = m_b g \cdot d \sin \theta.$$

T represents the second kinetic energy, U represents the second potential energy, $v^2$ has been described above, $m_b$ is configured for indicating mass of the movable object, $I_a$ is configured for indicating the rotational inertia of the first link, $I_b$ is configured for indicating rotational inertia of the movable object, and $g$ is configured for indicating the gravitational acceleration.

Based on this, the second kinetic energy can be partialized respectively for each degree of freedom (namely, $\theta$ and $\varphi$) and a derivative thereof (namely, $\dot{\theta}$ and $\dot{\varphi}$) in an extended coordinate system, to obtain the following formulas:

$$\frac{\partial T}{\partial \theta} = m_b r_a^2 \dot{\theta} - m_b r_a^2 \dot{\varphi} + m_b r_a^2 \theta^2 \dot{\theta} + m_b r_a^2 \varphi^2 \dot{\theta} - 2 m_b r_a^2 \theta \varphi \dot{\theta} + I_b \dot{\theta};$$

$$\frac{\partial T}{\partial \dot{\varphi}} = m_b r_a^2 \dot{\varphi} - m_b r_a^2 \dot{\theta} + I_a \dot{\varphi};$$

$$\frac{\partial T}{\partial \theta} = m_b r_a^2 \theta \dot{\theta}^2 - m_b r_a^2 \varphi \dot{\theta}^2;$$

$$\frac{\partial T}{\partial \varphi} = m_b r_a^2 \varphi \dot{\theta}^2 - m_b r_a^2 \theta \dot{\theta}^2;$$

and

$$\frac{\partial U}{\partial \theta} = m_b g \cdot d \cos \theta.$$

$r_a$ is configured for indicating the cross-sectional radius of the second.

Subsequently, for $\dfrac{\partial T}{\partial \dot{\theta}}$ and $\dfrac{\partial T}{\partial \dot{\varphi}}$, is respectively derived, to obtain the following formulas:

$$\frac{d}{dt}\frac{\partial T}{\partial \dot{\theta}} = m_b r_a^2 \ddot{\theta} - m_b r_a^2 \ddot{\varphi} + m_b r_a^2 \theta^2 \ddot{\theta} + 2 m_b r_a^2 \theta \dot{\theta}^2 + m_b r_a^2 \varphi^2 \ddot{\theta} + 2 m_b r_a^2 \varphi \dot{\varphi} \theta^2 - 2 m_b r_a^2 \varphi \dot{\theta}^2 -$$

$$2 m_b r_a^2 \theta \dot{\theta} \dot{\varphi} - 2 m_b r_a^2 \theta \varphi \ddot{\theta} + I_b \ddot{\theta}; \text{ and}$$

$$\frac{d}{dt}\frac{\partial T}{\partial \dot{\varphi}} = m_b r_a^2 \ddot{\varphi} - m_b r_a^2 \ddot{\theta} + I_a \ddot{\varphi}.$$

Subsequently, the third dynamic equation and the fourth dynamic equation may be obtained based on the Euler-Lagrange equation. A specific calculation process is as follows. Based on the Euler-Lagrange equation, the following two formulas are obtained:

$$\frac{d}{dt}\frac{\partial T}{\partial \dot{\theta}} - \frac{\partial T}{\partial \theta} + \frac{\partial U}{\partial \theta} = 0;$$

and

$$\frac{d}{dt}\frac{\partial T}{\partial \dot{\varphi}} - \frac{\partial T}{\partial \varphi} = \tau_2.$$

By substituting the foregoing items into the two formulas, the following first dynamic equation and second dynamic equation may be obtained:

$$m_b r_a^2 (1 + \theta^2 + \varphi^2 - 2\theta\varphi)\ddot{\theta} - m_b r_a^2 \ddot{\varphi} + m_b r_a^2 \theta\dot{\theta}^2 + 2m_b r_a^2 \varphi\dot{\varphi}\dot{\theta} - m_b r_a^2 \varphi\dot{\theta}^2 - 2m_b r_a^2 \theta\dot{\theta}\dot{\varphi} +$$

$$m_b g d \cos\theta + I_b \ddot{\theta} = 0 \qquad \text{(Formula A1); and}$$

$$m_b r_a^2 \ddot{\varphi} - m_b r_a^2 \ddot{\theta} - m_b r_a^2 \varphi\dot{\theta}^2 + m_b r_a^2 \theta\dot{\theta}^2 + I_a \ddot{\varphi} = \tau_2 \qquad \text{(Formula A2).}$$

The first line is configured for indicating a dynamical equation at $\theta$ degree of freedom (namely, the fourth dynamic equation). Because at the degree of freedom, actuation is lacked, actual input torque on the right side of the equation is 0. The second line is configured for indicating a dynamical equation at $\varphi$ degree of freedom (namely, the third dynamic equation), and actuation at the degree of freedom is a torque $\tau_2$ of a motor.

Based on the fourth dynamic equation (namely, Formula A1), $\ddot{\theta}$ may be obtained, and $\ddot{\theta}$ is substituted into the third dynamic equation (namely, Formula A2), to determine the third mapping relationship $f_2$. After the third mapping relationship is determined, the expected value of $\ddot{\varphi}$ may be obtained by using a proportional-integral-differential (PID) controller. The PID controller is a feedback loop component used in industrial control application. Based on a control principle of the PID controller, collected data may be compared with a corresponding reference value (which may be understood as an expected value or a target value), and a difference between the collected data and the corresponding reference value is configured for calculating a new input value. An objective of the new input value is to enable data of a system to reach or remain the reference value. For example, the PID controller may obtain the expected value of $\ddot{\alpha}$.

$$(\ddot{\varphi}) = -k_p(\varphi) - k_d(\dot{\varphi})$$

$k_p$ and $k_d$ are respectively a pre-set proportional control parameter and a pre-set differential control parameter. $\tau_2$ may be then determined based on the third mapping relationship and the expected value of $\ddot{\alpha}$, to control the robotic arm to rotate around the second rotation axis.

II. In a 3D model, the first mapping relationship is constructed.

In all embodiments, based on a 2D model, control needs to be respectively performed based on the XOZ plane and the YOZ plane. However, there is a coupling between the two planes. The foregoing second mapping relationship and third mapping relationship ignore the coupling and do not consider the mutual coupling between the XOZ plane and the YOZ plane. The first torque and the second torque obtained thereby also ignore the coupling, and the first torque and the second torque are determined independently in the YOZ plane and the XOZ plane, resulting in insufficient control of the robotic arm.

Based on this, all embodiments of present disclosure provide construction of the first mapping relationship in a 3D model. When constructing the first mapping relationship, coupling between different planes (for example, the XOZ plane and the YOZ plane) is fully considered, thereby improving control precision of the robotic arm. In this case, operation 130 may be implemented as operation 1321 and operation 1322. Details are as follows:

**Operation 1321:** Determine a third kinetic energy and a third potential energy in a three-dimensional space based on the first motion state. The third kinetic energy and the third potential energy is configured for constructing a third Euler-Lagrange equation.

**Operation 1322:** Determine the first mapping relationship based on the third Euler-Lagrange equation.

For example, the first mapping relationship is configured for mapping first motion state in the three-dimensional space to first control information, the three-dimensional space is constructed by the first direction, the second direction, and the perpendicular direction, the three-dimensional space includes a first plane and a second plane.

Similar to the 2D model, in the 3D model, the first mapping relationship is mainly determined based on the third Euler-Lagrange equation. For example, a partial derivative is solved for each degree of freedom in the kinetic energy and the potential energy, to obtain different partial derivatives. A plurality of dynamical equations may be then determined based on the Euler-Lagrange equation, and each dynamical equation is constructed based on a degree of freedom. Finally, the first mapping relationship is determined based on at least one dynamical equation.

Referring to the foregoing content, in all embodiments, operation 1322 may be implemented as follows: obtaining, based on the third Euler-Lagrange equation, a first dynamic equation for a first degree of freedom, a second dynamic equation for a second degree of freedom, a third dynamic equation for a third degree of freedom, and a fourth dynamic equation for a fourth degree of freedom; and

determining the first mapping relationship based on the first dynamic equation, the second dynamic equation, the third dynamic equation, and the fourth dynamic equation. The first degree of freedom being associated with a pitch movement of the first link, the first dynamic equation being configured for describing a drive constraint associated with a pitch movement of the first link, the second degree of freedom being a degree of freedom associated with a movement of the movable object in a first direction being an axial direction of the first link, and the second dynamic equation being configured for describing a drive constraint associated with the movement of the movable object in the first direction; the third degree of freedom being a degree of freedom associated with the roll movement of the first link, the third dynamic equation being configured for describing a drive constraint on the first link in the third degree of freedom, the fourth degree of freedom being a degree of freedom associated with an included angle between the movable object and a horizontal plane, and the fourth dynamic equation being configured for describing a drive constraint on the movable object in the fourth degree of freedom..

Referring to FIG. 6, it is considered that the robotic arm is located in the world coordinate system, and the world coordinate system is constructed based on that the robotic arm is in the initial state. The direction of the extension line of the robotic arm is a positive direction of the y-axis; in the initial state, a direction perpendicular to the y-axis and parallel to the ground is the direction of the x-axis; when standing in the same direction with the robotic arm, a direction of the right hand is a positive direction of the x-axis; a direction opposite to the gravity is vertical upward, a direction perpendicular to the ground is the z axis; and a space rectangular coordinate system, namely, the world coordinate system, is constructed based on this.

The three-dimensional space can be constructed based on the x, y, and z directions in the world coordinate system. The three-dimensional space includes the first plane (namely, the XOZ plane) and the second plane (namely, the YOZ plane).

Referring to the foregoing content, there are two coordinate systems in the three-dimensional space. One is the coordinate system (namely, the robotic arm coordinate system) shown in FIG. 6, and the other is the world coordinate system constructed based that the robotic arm is in the initial posture. The positions of the coordinate axes in the world coordinate system are fixed, and the positions of the coordinate axes in the robotic arm coordinate system change with the movement of the robotic arm.

An example in which the first plane is the XOZ plane, the movable object is a bottle, and the bottle is placed on the forearm of the robotic arm is used, the XOZ plane in the three-dimensional space may be simplified as FIG. 12, and the YOZ plane may be simplified as FIG. 13. x, y, and z represent the world coordinate system, and x', y', and z' represent the robotic arm coordinate system.

Based on the foregoing content, because the robotic arm can move around the first rotation axis and the second rotation axis, in the 3D model, the three-dimensional space needs to be divided into two planes to determine the first mapping relationship. For example, the first mapping relationship includes the first sub-mapping relationship and the second sub-mapping relationship, and the first control information includes the first torque and the second torque. The first sub-mapping relationship is configured for determining the first torque, and the second sub-mapping relationship is configured for determining the second torque.

Referring to FIG. 12, a circle at the lower left corner is configured for representing a joint rotating around the first link of the robotic arm, a rectangle connected thereto is a cross section of the first link, and a circle located on the rectangle is a cross section of the bottle. To simplify model description of the bottle, changes of a shape and a cross-sectional area of a head and a bottom of the bottle are ignored, the bottle is considered as a homogeneous rigid body, and a position of the bottle is evaluated by using a center of mass of the bottle. In addition, the bottle and the first link of the robotic arm are approximately perpendicularly disposed. Therefore, the cross section of the bottle is a rectangle.

The coordinate system of the robotic arm is constructed as follows. In an extension direction of the forearm, a direction pointing from the elbow joint to the wrist joint is a y' direction, a direction perpendicular to the y' direction obliquely upward is a z' direction, and a direction perpendicular to a y'Oz' plane to the right is an x' direction. Based on this, a cross-sectional radius of the bottle may be determined as $r_b$, mass of the bottle is $m_b$, a length of the bottle is $l_b$, rotational inertia of a rigid body of the forearm in the x' direction and the y' direction is $I_{ax}$ and $I_{ay}$, and rotational inertia of the bottle on the x' axis and the y' axis is respectively represented as $I_{bx}$ and $I_{by}$. In addition, an included angle between first link and the horizontal direction is $\alpha$, and a distance in the y' direction of the forearm between the center of the bottle and the center of the joint that controls the forearm to rotate is represented as s.

Referring to FIG. 13, a lower circle represents a cross section of the forearm of the robotic arm, and a rectangle represents a cross section of the bottle.

Based on this, the following may be obtained: A distance in an axial direction of the bottle between a contact point between the forearm and the bottle and a center of mass of the bottle is d, an angle by which the bottle rotates relative to the world coordinate system is $\theta$, and an roll angle by which the forearm rotates relative to the world coordinate system is $\varphi$. In addition, on a YOZ cross section of the forearm, a radius of the circle is $r_a$, a length of the forearm is $l_a$, mass of the forearm is $m_a$, rotational inertia of the rigid body of the forearm in the x' direction and y' direction is $I_{ax}$ and $I_{ay}$, and rotational inertia of the bottle in the x' direction and y' direction is $I_{bx}$ and $I_{by}$. Referring to FIG. 12 and FIG. 13, it is defined that $r = r_a + r_b$, where r is a sum of a radius $r_b$ of the cross section of the bottle and a radius $r_a$ of the circle on the YOZ cross section of the forearm. A rotation matrix is as follows:

$$R = \begin{bmatrix} 1 & 0 & 0 \\ 0 & \cos\ \alpha & -\sin\ \alpha \\ 0 & \sin\ \alpha & \cos\ \alpha \end{bmatrix}$$

In the XOZ plane, the center of mass of the bottle may be represented as:

$$C' = \begin{bmatrix} r\sin\ \varphi - d\cos\ \theta \\ 0 \\ r\cos\ \varphi + d\sin\ \theta \end{bmatrix}$$

The center of mass of the bottle is converted into the world coordinate system by using the rotation matrix R, which may be represented as:

$$C = \begin{bmatrix} 0 \\ s\cos\ \alpha \\ s\sin\ \alpha \end{bmatrix} + \begin{bmatrix} r\sin\ \varphi - d\cos\ \theta \\ -r\cos\ \varphi\sin\ \alpha - d\sin\ \theta\sin\ \alpha \\ r\cos\ \varphi\cos\ \alpha + d\sin\ \theta\cos\ \alpha \end{bmatrix}$$

s is configured for indicating the distance in the first direction being an axial direction of the forearm between the center of the movable object and the center of the joint that controls the forearm to rotate. Based on the foregoing formula, time is derived, and it is assumed that $\theta$ and $\varphi$ are minimum, $\sin\theta = 0$, $\sin\varphi = 0$, $\cos\theta = 0$, and $\cos\varphi = 0$. It may be considered that a pitch angle of the bottle is close to 0, which may be understood as that the bottle is not away from a direction parallel to the ground, and the roll angle of the forearm is small. Therefore, the position of the center of mass of the bottle in the world coordinate system may be obtained, and may be represented as:

$$\dot{C} = \begin{bmatrix} r\dot{\varphi} - \dot{d} \\ \cos\ \alpha\dot{s} - s\sin\ \alpha\dot{\alpha} - r\cos\ \alpha\dot{\alpha} - d\sin\ \alpha\dot{\theta} \\ \sin\ \alpha\dot{s} + s\cos\ \alpha\dot{\alpha} - r\sin\ \alpha\dot{\alpha} + d\cos\ \alpha\dot{\theta} \end{bmatrix}$$

For example, a square of a linear speed of the bottle may be determined based on a system. Details are as follows:

$$v^2 = r^2\dot{\varphi}^2 + \dot{d}^2 - 2r\dot{\varphi}\dot{d} + \dot{s}^2 + s^2\dot{\alpha}^2 + r^2\dot{\alpha}^2 + d^2\dot{\theta}^2 - 2r\dot{\alpha}\dot{\alpha} + 2sd\dot{\alpha}\dot{\theta}$$

Based on the third Euler-Lagrange equation, third kinetic energy and third potential energy of all rigid bodies in a system in the three-dimensional space need to be respectively solved. After the first motion state and the physical information are determined, the third kinetic energy and the third potential energy in the three-dimensional space need to be determined.

For example, a sum of the kinetic energy of all rigid bodies in the system may be represented as follows:

$$T = \frac{1}{2}I_{ax}\dot{\alpha}^2 + \frac{1}{2}I_{ay}\dot{\varphi}^2 + \frac{1}{2}I_{bx}\frac{\dot{s}^2}{r_b^2} + \frac{1}{2}I_{by}\dot{\theta}^2 + \frac{1}{2}m_b v^2$$

$$U = (s\sin\ \alpha + r\cos\ \varphi\cos\ \alpha + d\sin\ \theta\cos\ \alpha)m_b g + \frac{1}{2}m_a g l_a\sin\ \alpha$$

T represents the third kinetic energy, U represents the third potential energy, $v^2$ has been described above, $I_{ax}$ and $I_{ay}$ are respectively configured for indicating rotational inertia of the forearm in the third direction and the fourth direction, $I_{bx}$

and $I_{by}$ are respectively configured for indicating rotational inertia of the movable object in a third direction and a fourth direction, where the third direction and the fourth direction are the x direction and the y direction in the robotic arm coordinate system constructed based on the forearm, and *g* is configured for indicating the gravitational acceleration. Based on this, the third kinetic energy can be partialized respectively for each degree of freedom (namely, $\theta$ and $\varphi$) and a derivative thereof (namely, $\dot{\theta}$ and $\dot{\varphi}$) in an extended coordinate system, to obtain the following formulas:

$$\frac{\partial T}{\partial \dot{s}} == \frac{I_{bx}}{r_b^2}\dot{s} + m_b\dot{s} - m_b r\dot{\alpha}$$

$$\frac{\partial T}{\partial \dot{\alpha}} = I_{ax}\dot{\alpha} + m_b s^2\dot{\alpha} + m_b r^2\dot{\alpha} - m_b r\dot{s} + m_b sd\dot{\theta}$$

$$\frac{\partial T}{\partial \dot{\varphi}} = I_{ay}\dot{\varphi} + m_b r^2\dot{\varphi} - m_b r_a\dot{d} - m_b r\dot{d} + m_b rr_a\dot{\varphi}$$

$$\frac{\partial T}{\partial s} = m_b s\dot{\alpha}^2 + m_b d\dot{\alpha}\dot{\theta}$$

$$\frac{\partial T}{\partial \alpha} = 0$$

$$\frac{\partial T}{\partial \theta} = m_b r_a d\dot{\theta}^2 + m_b r_a s\dot{\alpha}\dot{\theta}$$

$$\frac{\partial T}{\partial \varphi} = -m_b r_a d\dot{\theta}^2 - m_b s r_a\dot{\alpha}\dot{\theta}$$

$$\frac{\partial U}{\partial s} = m_b g\sin\alpha$$

$$\frac{\partial U}{\partial \alpha} = m_b gs\cos\alpha - m_b gr\cos\varphi\sin\alpha - m_b gd\sin\theta\sin\alpha + \frac{1}{2}m_a gl_a\cos\alpha$$

$$\frac{\partial U}{\partial \theta} = m_b gr_a\sin\theta\cos\alpha + m_b gd\cos\theta\cos\alpha$$

$$\frac{\partial U}{\partial \varphi} = -m_b gr\sin\varphi\cos\alpha - m_b gr_a\sin\theta\cos\alpha.$$

Subsequently, for $\frac{\partial T}{\partial \dot{s}}$, $\frac{\partial T}{\partial \dot{\alpha}}$, and $\frac{\partial T}{\partial \dot{\varphi}}$, time is respectively derived, to obtain the following formulas:

$$\frac{d}{dt}\frac{\partial T}{\partial \dot{s}} = \frac{I_{bx}}{r_b^2}\ddot{s} + m_b\ddot{s} - m_b r\ddot{\alpha}$$

$$\frac{d}{dt}\frac{\partial T}{\partial \dot{\alpha}} = I_{ax}\ddot{\alpha} + m_b s^2\ddot{\alpha} + 2m_b s\dot{s}\dot{\alpha} + m_b r^2\ddot{\alpha} - m_b r\ddot{s} + m_b s\dot{d}\dot{\theta} + m_b \dot{s}d\dot{\theta} + m_b sd\ddot{\theta}$$

$$\frac{d}{dt}\frac{\partial T}{\partial \dot{\theta}} = I_{by}\ddot{\theta} + m_b r_a\ddot{d} - m_b rr_a\ddot{\varphi} + m_b \dot{s}d\dot{\alpha} + m_b s\dot{d}\dot{\alpha} + m_b sd\ddot{\alpha}$$

$$\frac{d}{dt}\frac{\partial T}{\partial \dot{\varphi}} = I_{ay}\ddot{\varphi} + m_b r^2\ddot{\varphi} - m_b r_a\ddot{d} - m_b r\ddot{d} + m_b rr_a\ddot{\varphi}$$

$r_a$ is configured for indicating a cross-sectional radius of the robotic arm, $r_b$ is configured for indicating a cross-sectional radius of the movable object, $m_a$ is configured for indicating mass of the forearm, and $m_b$ is configured for indicating mass of the movable object. Subsequently, the first dynamic equation, the second dynamic equation, the third dynamic equation and the fourth dynamic equation may be obtained based on the third Euler-Lagrange equation, which are specifically as follows.

$$\frac{I_{bx}}{r_b^2}\ddot{s} + m_b\ddot{s} - m_b r\ddot{\alpha} - m_b s\dot{\alpha}^2 - m_b d\dot{\alpha}\dot{\theta} + m_b g\sin\alpha = 0 \qquad \text{(Formula 1)}$$

$$-m_b r\ddot{s} + I_{ax}\ddot{\alpha} + m_b s^2\ddot{\alpha} + m_b r^2\ddot{\alpha} + m_b sd\dot{\theta} + m_b \dot{s}d\dot{\theta} + m_b s\dot{d}\dot{\theta}$$

$$+2m_b s\dot{s}\dot{\alpha} + m_b gs\cos\alpha - m_b gr\cos\varphi\sin\alpha - m_b gd\sin\theta\sin\alpha + \frac{1}{2}m_a gl_a\cos\alpha = \tau_x$$

$$\text{(Formula 2)}$$

$$m_b sd\ddot{\alpha} + I_{by}\ddot{\theta} + m_b r^2\ddot{\theta} - m_b r_a^2\ddot{\varphi} - m_b r_a\ddot{\varphi} + m_b \dot{s}d\dot{\alpha} + m_b s\dot{d}\alpha - m_b r_a d\dot{\theta}^2 - m_b r_a s\dot{\alpha}\dot{\theta} +$$

$$m_b gr_a\sin\theta\cos\alpha + m_b gd\cos\theta\cos\alpha = 0 \qquad \text{(Formula 3)}$$

$$I_{ay}\ddot{\varphi} + m_b r^2\ddot{\varphi} + m_b rr_a\ddot{\varphi} + m_b r_a^2\ddot{\varphi} + m_b rr_a\ddot{\varphi} - m_b r_a^2\ddot{\theta} - m_b r_a\ddot{\theta} + m_b r_a d\dot{\theta}^2 +$$

$$m_b sr_a\dot{\alpha}\dot{\theta} - m_b gr\sin\varphi\cos\alpha - m_b gr_a\sin\theta\cos\alpha = \tau_y \qquad \text{(Formula 4)}.$$

The first line is configured for indicating a dynamical equation at s degree of freedom (namely, the second dynamic equation, or Formula 1). Because at the degree of freedom, actuation is lacked, actual input moment on the right side of the equation is 0. The second line is configured for indicating a dynamical equation at $\alpha$ degree of freedom (namely, the first dynamic equation, or Formula 2), and actuation at the degree of freedom is a moment $\tau_x$ of a motor. The third line is configured for indicating a dynamical equation at $\theta$ degree of freedom (namely, the fourth dynamic equation, or Formula 3). Because at the degree of freedom, actuation is lacked, actual input moment on the right side of the equation is 0. The fourth line is configured for indicating a dynamical equation at $\varphi$ degree of freedom (namely, the third dynamic equation, or Formula 4), and actuation at the degree of freedom is a moment $\tau_y$ of a motor.

In all embodiments, Formulas 1 to 4 may be implemented as follows:

$$\begin{cases} m_{ss}\ddot{s} + m_{s\alpha}\ddot{\alpha} + c_s + g_s = 0 \\ m_{\alpha s}\ddot{s} + m_{\alpha\alpha}\ddot{\alpha} + m_{\alpha\theta}\ddot{\theta} + c_\alpha + g_\alpha = \tau_x \end{cases}$$

$$\begin{cases} m_{\theta\alpha}\ddot{\alpha} + m_{\theta\theta}\ddot{\theta} + m_{\theta\varphi}\ddot{\varphi} + c_\theta + g_\theta(\theta,\alpha) = 0 \\ m_{\varphi\theta}\ddot{\theta} + m_{\varphi\varphi}\ddot{\varphi} + c_\varphi + g_\varphi = \tau_y \end{cases}$$

For ease of description below, the foregoing forms are marked as follows:

$$M \begin{bmatrix} \ddot{s} \\ \ddot{\alpha} \\ \ddot{\theta} \\ \ddot{\varphi} \end{bmatrix} + C + G = \begin{bmatrix} 0 & 0 \\ 1 & 0 \\ 0 & 0 \\ 0 & 1 \end{bmatrix} \begin{pmatrix} \tau_x \\ \tau_y \end{pmatrix}.$$

The foregoing two brief forms exist for ease of description, and essentials thereof still refer to Formulas 1 to 4. Parameters related to the foregoing brief forms are not described in detail in present disclosure again. For details, refer to the foregoing descriptions about Formulas 1 to 4. Then, for the first line and the second line (namely, Formula 1 and Formula 2), $\ddot{\alpha}$ may be obtained based on the first line, and is substituted into the second line, and the first sub-mapping relationship $f_{31} = (s, \tau_x)$ between $\tau_x$ and s can be obtained. For the third line and the fourth line (namely, Formula 3 and Formula 4), $\ddot{\varphi}$ may be obtained based on the third line, and is substituted into the fourth line, to obtain the second sub-mapping relationship $f_{32} = (\theta, \tau_y)$ between $\tau_y$ and $\theta$. The foregoing process may be understood as that, the second line and the fourth line are selected, and the following first mapping relationship may be obtained:

$$\begin{pmatrix} \ddot{s} \\ \ddot{\theta} \end{pmatrix} = f_s + h_s \begin{pmatrix} \tau_x \\ \tau_y \end{pmatrix}$$

$$f_s = [-M^{-1}C - M^{-1}G]_{2.4} \text{ and } h_s = \left( M^{-1} \begin{bmatrix} 0 & 0 \\ 1 & 0 \\ 0 & 0 \\ 0 & 1 \end{bmatrix} \right)_{2.4}.$$

After the first mapping relationship is determined, the expected values of $\ddot{s}$ and $\ddot{\theta}$ may be determined by using a PID controller, and $\tau_x$ and $\tau_y$ may be determined based on the first mapping relationship and the expected values of $\ddot{s}$ and $\ddot{\theta}$. In this way, the robotic arm is controlled. For example, for the PID controller, there is the following control law:

$$\begin{pmatrix} \ddot{s} \\ \ddot{\theta} \end{pmatrix} = -k_p \begin{pmatrix} s \\ \theta \end{pmatrix} - k_d \begin{pmatrix} \dot{s} \\ \dot{\theta} \end{pmatrix}$$

$k_p$ and $k_d$ are respectively a pre-set proportional control parameter and a pre-set differential control parameter, and the two parameters may be adjusted based on results of a plurality of experiments. Further, it may be obtained based on feedback linearization that:

$$\begin{pmatrix} \tau_x \\ \tau_y \end{pmatrix} = h_s^{-1} \left( -f_s - k_p \begin{pmatrix} s \\ \theta \end{pmatrix} - k_d \begin{pmatrix} \dot{s} \\ \dot{\theta} \end{pmatrix} \right).$$

For example, when $\lim\limits_{\tau \to \infty} s(t) = 0$ and $\lim\limits_{\tau \to \infty} \theta(t) = 0$, and $s = \theta = 0$ and $\alpha = 0$, $\tau_x$ and $\tau_y$ can be determined, to control the robotic arm to move around the first rotation axis and the second rotation axis.

In conclusion, in the robotic arm control method provided in all embodiments of present disclosure, two implementations of constructing a mapping relationship are provided, and can respectively implemented based on a 2D/3D model. Different mapping relationships lead to different determined control information. A corresponding mapping relationship may be selected for control of the robotic arm based on an actual requirement, to satisfy different control requirements. This is not limited in present disclosure.

Referring to the foregoing content, the first mapping relationship is configured for determining The first control information, so that the movable object remains balanced on the robotic arm. Referring to FIG. 9, operation 160 may be implemented similar or same as operation 164. Details are as follows:

**Operation 164:** Control, according to the first control information, the first link to perform at least one movement, thereby causing the movable object to be in the pre-defined balanced state on the first link.

The at least one movement of the first link comprising at least one of : keeping relatively stationary to the movable object, a roll movement and a pitch movement.

Referring to the foregoing content, the first control information includes the first torque and/or the second torque.

The first control information is used to formed a sequence for at least one moment, and at least one movement of at least one joint for controlling the first link is implemented based on the sequence. Based on the at least one movement of at least one joint, the first link visually presents two states: a stationary state and a moving state. That the first link visually presents the stationary state may be understood as that a movement of the first link is remaining relatively stationary. In other words, based on at least one movement of at least one joint, the first link visually presents a representation that the first link is stationary. That is, the first link visually presents the moving state may be understood as that the at least one movement of the first link includes a roll movement and/or a pitch movement. In other words, based on at least one movement, the first link can visually present a representation that the robotic arm is moving. The moving may be movement and/or rotation of the first link. For example, the first link swings up and down by using the elbow joint as a center, or the robotic arm rotates left and right by using the elbow joint as a rotation center.

In all embodiments, The first control information includes the first torque, and operation 160 may be implemented as: controlling, according to the first control information, the first link to perform a pitch movement, thereby causing the movable object to be in the pre-defined balanced state on the first link. In all embodiments, the first control information includes the second torque, and operation 160 may be implemented as: controlling, according to the first control information, the first link to perform a roll movement, thereby causing the movable object to be in the pre-defined balanced state on the first link. For example, The pre-defined balanced state may include the following two types: a statically balanced state, where the movable object in the statically balanced state is stationary on the first link (or it may be understood as that the movable object is stationary relative to the first link); and a dynamically balanced state, where the movable object in the dynamically balanced state displaces or rolls on the first link (or it may be understood as that the movable object displaces or rolls relative to the first link). In all embodiments, the movable object in the dynamically balanced state is in a state in which the movable object displaces or rolls on the first link but remains on the first link without falling. All embodiments do not limit a speed and a direction of displacing or rolling of the movable object on the robotic arm. The first control information determined based on the first mapping relationship enables the robotic arm to perform at least one movement, so that the movable object is always stationary on the first link, or a relative position of the movable object and the first link is changed but the movable object does not fall off the robotic arm..

The first control information enables the robotic arm to perform at least one movement, so that the movable object is always stationary on the robotic arm, or a relative position of the movable object and the robotic arm is changed but the movable object does not fall off the robotic arm.

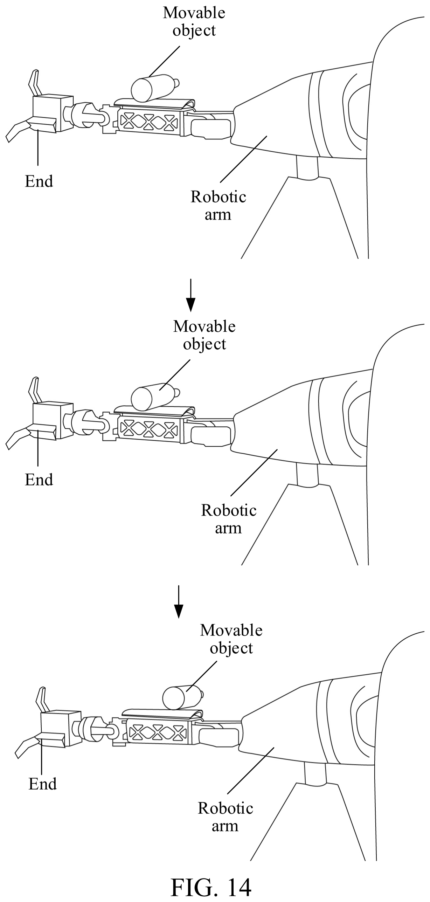

Referring to FIG. 14, an example in which the movable object is a bottle is used, and the bottle is placed on a forearm of the robotic arm. After determining the first control information, the controller controls the at least one joint of the forearm to rotate based on thehe first control information. Assuming that the movable object is in the dynamically balanced state, in this case, the bottle may roll on the forearm of the robotic arm. As shown in FIG. 14, the robotic arm performs fine adjustment in the x or y direction, so that the bottle rolls from the left side (namely, a position close to the end of the robotic arm) in the figure to the right side (namely, a position close to the elbow joint of the robotic arm) in the figure, to avoid falling off the forearm.

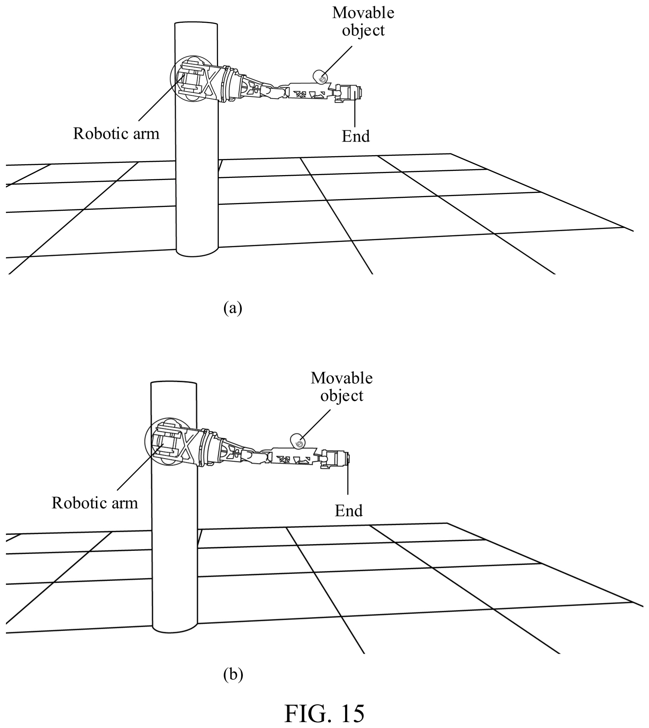

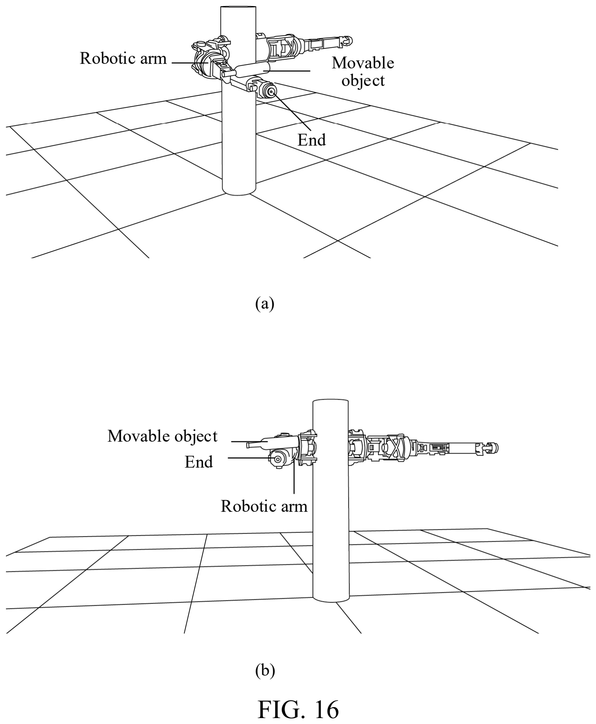

Based on this, simulation may be performed for implementation. Refer to multi-views shown in FIG. 15 and FIG. 16. An example in which the movable object is a bottle is used. The bottle is placed on the forearm of the robotic arm, (a) and (b) in FIG. 15 respectively show two side views of the bottle when the bottle rolls on the robotic arm, and (a) and (b) in FIG. 16 respectively show two main views of the bottle when the bottle rolls on the robotic arm.

Referring to FIG. 14 to FIG. 16, the robotic arm control method provided in all embodiments of present disclosure may be applied to a robotic arm including one or more links. The movable object may be placed on the forearm or the upper arm of the robotic arm, or may be placed on an intermediate link of the robotic arm. This is not limited in present disclosure.

In all embodiments, operation 164 may be implemented as follows: controlling, according to the first control information, the first link to perform the at least one movement, thereby causing the movable object to be in a statically balanced state, the movable object in the statically balanced state being stationary to the first link; and controlling, according to the first control information, the first link to perform at least one movement, thereby causing the movable object to be in a dynamically balanced state, the movable object in the dynamically balanced state translating or rolling on the first link without falling.

In all embodiments, after the different mapping relationships are constructed, one or more intermediate variables (namely, one or more of $\varphi$, $\alpha$, s, or $\theta$) need to be determined by using the PID controller. Based on a control principle of the PID controller, there is a reference value configured for determining the foregoing variable.

For example, when the reference value is a first value, according to the first control information, the robotic arm is controlled to perform at least one movement behavior, to cause the movable object to be in the statically balanced state; and when the reference value is not the first value, according to The first control information, the robotic arm is controlled to perform at least one movement behavior, to cause the movable object to be in the dynamically balanced state.

The first value may be set based on an actual requirement. For example, the first value is 0. In all embodiments, when the robotic arm is controlled to move, at least one of a torque, a rotation angle, or an angular velocity corresponding to the robotic arm changes. Referring to FIG. 6, the robotic arm rotates in the x or y direction, to implement fine adjustment of the position of the movable object on the robotic arm. In this way, at least one of the torque, the rotation angle, or the angular velocity of the robotic arm is changed.

In conclusion, the robotic arm control method provided in all embodiments of present disclosure provides a plurality of implementations for a movable object to be in a balanced state on a robotic arm, so that the movable object can remain balanced on the robotic arm without falling.

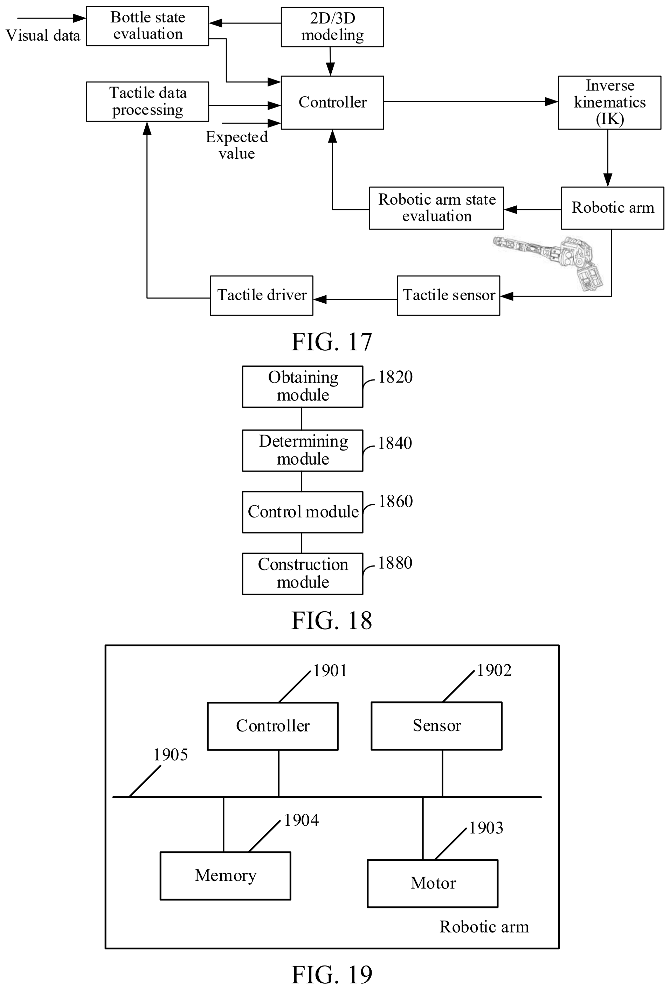

For example, an overall control architecture of the robotic arm is shown in FIG. 17.

Referring to the foregoing content, an objective of the robotic arm control method is to control a posture and an action of the robotic arm by inputting an instruction for a joint motor of the robotic arm. For example, a joint motor encoder is mounted on each joint motor of the robotic arm, to feed back information such as an angle, an angular velocity, and electric current of rotation of the joint motor. The information may be configured for state evaluation of the robotic arm. In addition, the tactile sensor is further mounted on the finger, palm, and some links of the robotic arm. Subsequently, collected tactile signals are collected by a tactile driver for processing data such as signals.

In all embodiments, a camera may be further mounted in an external environment of the robotic arm, to obtain data of visual perception. Fusion processing may be performed on the data of the visual perception and data of tactile perception. Using an example in which the movable object is a bottle, state evaluation of the bottle (namely, bottle state evaluation) can be obtained through fusion processing performed on the perception data. For related descriptions of the fusion processing, refer to the foregoing content. Subsequently, the controller of the robotic arm may be designed based on the tactile perception information and the position and posture of the bottle obtained through bottle state evaluation. The controller may be designed based on a Euler-Lagrange model. An output of the controller may be a position and a posture of the end of the robotic arm, or may be a position and a posture of a center of mass of a link of the robotic arm.

An overall control structure of the robotic arm involved in present disclosure further includes 2D/3D modeling, to construct systems of the robotic arm and/or the movable object, to determine the first mapping relationship between the first motion state and The first control information. In all embodiments, the 2D/3D modeling may further be configured for presetting a future state of the bottle.

For related content of determining the first mapping relationship, refer to the foregoing content. Details are not repeated herein.

Referring to FIG. 13, an input of the controller further includes an expected value. The expected value is the expected value used in the foregoing content of determining the intermediate parameter by using the PID controller. For related descriptions, refer to the foregoing content. Details are not repeated herein.

Subsequently, a model of the robotic arm may be used to calculate a joint angle of each joint through inverse kinematics by using the position and the posture of the end or the position and the posture of the center of mass of the link. As time changes, the controller outputs a sequence of the postures of the end of the robotic arm or the postures of the center of mass of the link, and therefore, corresponds to a series of inverse kinematics solutions, to obtain a sequence of joint angles and joint angular velocities of the robotic arm. The sequence of the joint angles and the joint angular velocities is sent to the robotic arm, to control the posture of the end of the robotic arm or a position and a posture of a center of mass of a link.

The following describes an apparatus according to all embodiment of present disclosure. For details that are not described in detail in the apparatus embodiments, refer to corresponding descriptions in the foregoing method embodiments, and details are not repeated herein.

FIG. 18 is a schematic diagram of a control apparatus of a robotic arm according to all embodiments of present disclosure. The apparatus includes: an obtaining module 1820, configured to perform operation 120 in the embodiments of FIG. 4; a determining module 1840, configured to perform operation 140 in the embodiments of FIG. 4; and a control module 1860, configured to perform operation 160 in the embodiments of FIG. 4.

In all embodiments, the first motion state includes second motion state and third motion state, the first mapping relationship includes a second mapping relationship and a third mapping relationship, and the first control information includes second control information and third control information. The determining module 1840 is configured to perform operation 141 in the embodiments of FIG. 7, where the second control information is configured for controlling the pitch movement of the first link; and perform operation 142 in the embodiments of FIG. 7, where the third control information being configured for controlling the roll movement of the first link.

In all embodiments, the second motion state includes a first pitch angle of the first link, the second control information comprises a first torque for controlling the pitch movement of the first link. The determining module 1840 is configured to determine the first torque based on the second mapping relationship.

In all embodiments, the third motion state includes the third motion state comprises an included angle between the movable object and a horizontal plane, and the third control information includes a second torque for controlling the roll movement of the first link. The determining module 1840 is configured to determine the second torque based on the third mapping relationship and the included angle.

In all embodiments, the first motion state includes first motion state, the first mapping relationship includes a first mapping relationship, and The first control information includes first control information. The determining module 1840 is configured to perform operation 143 in the embodiments of FIG. 7, where the first control information is configured for controlling the robotic arm to move in a three-dimensional space, that is the first control information is configured for controlling a roll movement and a pitch movement of the first link. The three-dimensional space is constructed by a first direction, a second direction, and a perpendicular direction, the first direction is a direction of a straight line perpendicular to a connection line between two ends of the robotic arm when the robotic arm extends, the second direction is a direction of the connection line between the two ends of the robotic arm when the robotic arm extends, the perpendicular direction is perpendicular to the connection line between the two ends of the robotic arm when the robotic arm extends, and any two of the first direction, the second direction, and the perpendicular direction are perpendicular; and the first plane and the second plane are formed in the three-dimensional space, the first plane is configured for indicating a two-dimensional plane constructed by the first direction and the perpendicular direction, and the second plane is configured for indicating another two-dimensional plane constructed by the second direction and the perpendicular direction. In all embodiments, the first motion state includes: a distance in the first direction between a center of the movable object and a center of a joint that controls the robotic arm to rotate, and a second rotation angle of the movable object in the first plane. The first mapping relationship includes a first sub-mapping relationship and a second sub-mapping relationship. The first control information includes: a first torque applied in a pitch direction in which the first link rotates around a first rotation axis, and a second torque applied in a roll direction in which the first link rotates around a second rotation axis. The determining module 1840 is configured to determine the first torque based on the first sub-mapping relationship, where the first torque is configured for controlling the first link to move around the first rotation axis; and determine the second torque based on the second sub-mapping relationship, where the second torque is configured for controlling the first link to move around the second rotation axis.

In all embodiments, the apparatus further includes a construction module 1880, configured to perform operation 130 in the embodiments of FIG. 8.

In all embodiments, the first mapping relationship includes a first sub-mapping relationship and a second sub-mapping relationship. The construction module 1880 is configured to perform operation 1311 and operation 1312 in the embodiments of FIG. 9. The second mapping relationship is configured for mapping second motion state in the first plane to second control information, the third mapping relationship is configured for mapping the third motion state in the second plane to the third control information.

In all embodiments, the construction module 1880 is configured to obtain, based on the first Euler-Lagrange equation, a first dynamic equation constructed based on a first degree of freedom and a second dynamic equation constructed based on a second degree of freedom; and determine the second mapping relationship based on the first dynamic equation and the second dynamic equation. The first degree of freedom is associated with a pitch movement of the first link, the first dynamic equation is configured for describing a drive constraint associated with a pitch movement of the first link, the second degree of freedom being a degree of freedom associated with a movement of the movable object in a first direction is an axial direction of the first link, and the second dynamic equation is configured for describing a drive constraint associated with the movement of the movable object in the first direction.

In all embodiments, the construction module 1880 is configured to obtain, based on the second Euler-Lagrange equation, a third dynamic equation constructed based on a third degree of freedom and a fourth dynamic equation constructed based on a fourth degree of freedom; and determine the third mapping relationship based on the third dynamic equation and the fourth dynamic equation. The third degree of freedom being a degree of freedom associated with the roll movement of the first link , the third dynamic equation is configured for describing a drive constraint on the first link in the third degree of freedom, the fourth degree of freedom is a degree of freedom associated with an included angle between the movable object and a horizontal plane, and the fourth dynamic equation is configured for describing a drive constraint on the movable object in the fourth degree of freedom.

In all embodiments, the first mapping relationship includes a first mapping relationship, and the construction module 1880 is configured to perform operation 1321 and operation 1322 in the embodiments of FIG. 9. The first mapping relationship is configured for describing a mapping relationship between the first motion state in the three-dimensional space and first control information, the three-dimensional space is constructed by a first direction, a second direction, and a perpendicular direction, the three-dimensional space includes a first plane and a second plane.

In all embodiments, the construction module 1880 is configured to obtain, based on the third Euler-Lagrange equation, a first dynamic equation constructed based on a first degree of freedom, a second dynamic equation constructed based on a second degree of freedom, a third dynamic equation constructed based on a third degree of freedom, and a fourth dynamic equation constructed based on a fourth degree of freedom; and determine the first mapping relationship based on the first dynamic equation, the second dynamic equation, the third dynamic equation, and the fourth dynamic equation. The first degree of freedom is associated with a pitch movement of the first link, the first dynamic equation is configured for describing a drive constraint associated with a pitch movement of the first link, the second degree of freedom is a degree of freedom associated with a movement of the movable object in a first direction being an axial direction of the first link, and the second dynamic equation is configured for describing a drive constraint associated with the movement of the movable object in the first direction; the third degree of freedom is a degree of freedom associated with the roll movement of the first link, the third dynamic equation is configured for describing a drive constraint on the first link in the third degree of freedom, the fourth degree of freedom being a degree of freedom associated with an included angle between the movable object and a horizontal plane, and the fourth dynamic equation is configured for describing a drive constraint on the movable object in the fourth degree of freedom.

In all embodiments, the control module 1860 is configured to perform operation 164 in the embodiments of FIG. 9. The movement behavior of the robotic arm includes at least one of the following behaviors: remaining relatively stationary, moving, or rotating.

In all embodiments, the control module 1860 is configured to control, according to The first control information, the robotic arm to perform at least one movement behavior, to cause the movable object to be in a statically balanced state, where the movable object in the statically balanced state is stationary on the robotic arm; and control, according to The first control information, the robotic arm to perform at least one movement behavior, to cause the movable object to be in a dynamically balanced state, where the movable object in the dynamically balanced state translates or rolls on the robotic arm.

In all embodiments, the obtaining module 1820 is configured to obtain the first motion state from the system based on a visual sensor; or obtain the first motion state from the system based on the visual sensor and a tactile sensor.

FIG. 19 is a schematic structural block diagram of a robotic arm according to all embodiments of present disclosure. The robotic arm in the embodiments shown in FIG. 19 may include: one or more controllers 1901; and one or more sensors 1902, one or more motors 1903, and a memory 1904. The controller 1901, the sensor 1902, the motor 1903, and the memory 1904 are connected by a bus 1905. The memory 1904 is configured to store a computer program. The computer program includes program instructions. The controller 1901 is configured to execute the program instructions stored in the memory 1904. The memory 1904 may include a volatile memory such as a random access memory (RAM). The memory 1904 may alternatively include a non-volatile memory such as a flash memory or a solid-state drive (SSD). The memory 1904 may alternatively include a combination of the foregoing types of memories.

The controller 1901 may be a central controller. The controller 1901 may further include a hardware chip. The hardware chip may be an application-specific integrated circuit (ASIC), a programmable logic device (PLD), or the like. The PLD may be a field-programmable gate array (FPGA), a generic array logic (GAL), or the like. The controller 1901 may alternatively be a combination of the foregoing structures.

In all embodiments of present disclosure, the memory 1904 is configured to store a computer program, the computer program includes program instructions, and the controller 1901 is configured to execute the program instructions stored in the memory 1904, to implement operations of the foregoing robotic arm control method.

In all embodiments, the controller 1901 is configured to invoke program instructions, to perform operation 120, operation 140, and operation 160 in the embodiments of FIG. 4. In all embodiments, the first motion state includes second motion state and third motion state, the first mapping relationship includes a second mapping relationship and a third mapping relationship, and The first control information includes second control information and third control information. The controller 1901 is configured to invoke program instructions, and is configured to perform operation 141 in the embodiments of FIG. 7, where the second control information is configured for controlling the robotic arm to move around the first rotation axis, and perform operation 142 in the embodiments of FIG. 7, where the third control information is configured for controlling the robotic arm to move around the second rotation axis. The first plane is configured for indicating a two-dimensional plane constructed by a first direction and a perpendicular direction perpendicular to a connection line between two ends of the robotic arm when the robotic arm extends, the second plane is configured for indicating another two-dimensional plane constructed by a second direction and the perpendicular direction, the first direction is a direction of a straight line perpendicular to the connection line between the two ends of the robotic arm when the robotic arm extends, the second direction is a direction of the connection line between the two ends of the robotic arm when the robotic arm extends, any two of the first direction, the second direction, and the perpendicular direction are perpendicular, the first rotation axis is a straight line perpendicular to the connection line between the two ends of the robotic arm when the robotic arm extends, the first rotation axis is located at an end of the robotic arm close to a shoulder joint of the robotic arm, the second rotation axis is an extension line of the connection line between the two ends of the robotic arm when the robotic arm extends, and the second rotation axis passes through a center of the robotic arm.

In all embodiments, the second motion state includes a first rotation angle of the robotic arm in the first plane, and the second control information includes a first torque applied in a roll direction in which the robotic arm rotates around the first rotation axis. The controller 1901 is configured to invoke the program instructions, to perform the following operation: determining the first torque based on the second mapping relationship between the first rotation angle and the first torque.

In all embodiments, the third motion state includes an included angle between the robotic arm and the horizontal plane, and the third control information includes a second torque applied in a pitch direction in which the robotic arm rotates around the second rotation axis. The controller 1901 is configured to invoke the program instructions, to perform the following operation: determining the second torque based on the third mapping relationship between the included angle and the second torque.

In all embodiments, the first control information controller 1901 is configured to invoke the program instructions, to perform operation 143 in the embodiments of FIG. 7, where the first control information is configured for controlling the robotic arm to move in a three-dimensional space. The three-dimensional space is constructed by a first direction, a second direction, and a perpendicular direction, the first direction is a direction of a straight line perpendicular to a connection line between two ends of the robotic arm when the robotic arm extends, the second direction is a direction of the connection line between the two ends of the robotic arm when the robotic arm extends, the perpendicular direction is perpendicular to the connection line between the two ends of the robotic arm when the robotic arm extends, and any two of the first direction, the second direction, and the perpendicular direction are perpendicular; and the first plane and the second plane are formed in the three-dimensional space, the first plane is configured for indicating a two-dimensional plane constructed by the first direction and the perpendicular direction, and the second plane is configured for indicating another two-dimensional plane constructed by the second direction and the perpendicular direction.

In all embodiments, the first motion state includes: a distance in the first direction between a center of the movable object and a center of a joint that controls the robotic arm to rotate, and a second rotation angle of the movable object in the first plane. The first mapping relationship includes a first sub-mapping relationship and a second sub-mapping relationship. The first control information includes: a first torque applied in a roll direction in which the robotic arm rotates around a first rotation axis, and a second torque applied in a pitch direction in which the robotic arm rotates around a second rotation axis. The controller 1901 is configured to invoke the program instructions, to perform the following operations: determining the first torque based on the first sub-mapping relationship between the distance and the first torque, where the first torque is configured for controlling the robotic arm to move around the first rotation axis; and determining the second torque based on the second sub-mapping relationship between the second rotation angle and the second torque, where the second torque is configured for controlling the robotic arm to move around the second rotation axis. The first rotation axis is a straight line perpendicular to the connection line between the two ends of the robotic arm when the robotic arm extends, the first rotation axis is located at an end of the robotic arm close to a shoulder joint of the robotic arm, the second rotation axis is an extension line of the connection line between the two ends of the robotic arm when the robotic arm extends, and the second rotation axis passes through a center of the robotic arm.

In all embodiments, the controller 1901 is configured to invoke program instructions, to perform operation 130 in the embodiments of FIG. 8. In all embodiments, the first mapping relationship includes a second mapping relationship and a third mapping relationship. The controller 1901 is configured to invoke the program instructions, to perform operation 1311, and operation 1312 in the embodiments of FIG. 9. The second mapping relationship is configured for describing a mapping relationship between second motion state in the first plane and second control information, the third mapping relationship is configured for describing a mapping relationship between third motion state in the second plane and third control information, the first plane is configured for indicating a two-dimensional plane constructed by a first direction and a perpendicular direction perpendicular to a connection line between two ends of the robotic arm when the robotic arm extends, the second plane is configured for indicating another two-dimensional plane constructed by a second direction and the perpendicular direction, the first direction is a direction of a straight line perpendicular to the connection line between the two ends of the robotic arm when the robotic arm extends, the second direction is a direction of the connection line between the two ends of the robotic arm when the robotic arm extends, and any two of the first direction, the second direction, and the perpendicular direction are perpendicular.

In all embodiments, the controller 1901 is configured to invoke the program instructions, to perform the following operations: obtaining, based on the Euler-Lagrange equation, a first dynamic equation constructed based on a first degree of freedom and a second dynamic equation constructed based on a second degree of freedom; and determining the second mapping relationship based on the first dynamic equation and the second dynamic equation. The first degree of freedom is a degree of freedom corresponding to the second rotation angle of the robotic arm in the first plane, the first dynamic equation is configured for describing a drive constraint on the robotic arm in the first plane, the second degree of freedom is a degree of freedom corresponding to the first rotation angle of the movable object in the first plane, and the second dynamic equation is configured for describing a drive constraint on the movable object in the first plane.

In all embodiments, the controller 1901 is configured to invoke the program instructions, to perform the following operations: obtaining, based on the Euler-Lagrange equation, a third dynamic equation constructed based on a third degree of freedom and a fourth dynamic equation constructed based on a fourth degree of freedom; and determining the third mapping relationship based on the third dynamic equation and the fourth dynamic equation. The third degree of freedom is a degree of freedom corresponding to a distance in the first direction between a center of the movable object and a center of a joint that controls the robotic arm to rotate, the third dynamic equation is configured for describing a drive constraint on the movable object in the second plane, the fourth degree of freedom is a degree of freedom corresponding to an included angle between the robotic arm and a horizontal plane, and the fourth dynamic equation is configured for describing a drive constraint on the robotic arm in the second plane. In all embodiments, the first mapping relationship includes a first mapping relationship, and the controller 1901 is configured to invoke the program instructions, to perform operation 1321 and operation 1322 in the embodiments of FIG. 9. The first mapping relationship is configured for describing a mapping relationship between first motion state in a three-dimensional space and first control information, the three-dimensional space is constructed by a first direction, a second direction, and a perpendicular direction, the three-dimensional space includes a first plane and a second plane, the first plane is configured for indicating a two-dimensional plane constructed by the first direction and the perpendicular direction, the second plane is configured for indicating another two-dimensional plane constructed by the second direction and the perpendicular direction, the first direction is a direction of a straight line perpendicular to a connection line between two ends of the robotic arm when the robotic arm extends, the second direction is a direction of the connection line between the two ends of the robotic arm when the robotic arm extends, any two of the first direction, the second direction, and the perpendicular direction are perpendicular, and the perpendicular direction is perpendicular to the connection line between the two ends of the robotic arm when the robotic arm extends.

In all embodiments, the controller 1901 is configured to invoke the program instructions, to perform the following operations:

obtaining, based on the Euler-Lagrange equation, a first dynamic equation constructed based on a first degree of freedom, a second dynamic equation constructed based on a second degree of freedom, a third dynamic equation constructed based on a third degree of freedom, and a fourth dynamic equation constructed based on a fourth degree of freedom; and

determining the first mapping relationship based on the first dynamic equation, the second dynamic equation, the third dynamic equation, and the fourth dynamic equation. The first degree of freedom is a degree of freedom corresponding to the first rotation angle of the robotic arm in the first plane, the first dynamic equation is configured for describing a drive constraint on the robotic arm in the first plane, the second degree of freedom is a degree of freedom corresponding to the second rotation angle of the movable object in the first plane, the second dynamic equation is configured for describing a drive constraint on the movable object in the first plane, the third degree of freedom is a degree of freedom corresponding to a distance in the first direction between a center of the movable object and a center of a joint that controls the robotic arm to rotate, the third dynamic equation is configured for describing a drive constraint on the movable object in the second plane, the fourth degree of freedom is a degree of freedom corresponding to an included angle between the robotic arm and a horizontal plane, and the fourth dynamic equation is configured for describing a drive constraint on the robotic arm in the second plane.

The sensor 1902 is configured to obtain the first motion state from the system based on a visual sensor; or obtain the first motion state from the system based on the visual sensor and a tactile sensor. For related content of the first motion state, refer to the foregoing content. Details are not repeated herein. The motor 1903 is configured to control the robotic arm to move and complete an action task based on The first control information. The motor 1903 includes joint motors and wheel motors of the robotic arm.

For example, all embodiments of present disclosure further provides a robot. The robot includes the foregoing robotic arm. The robotic arm may be configured to implement the robotic arm control method provided in the foregoing method embodiments. For a structure of the robotic arm, refer to the descriptions in FIG. 19, and for a robotic arm control method, refer to the foregoing method embodiments, and details are not repeated herein.

All embodiments of present disclosure further provide a robotic arm. The robotic arm includes a controller and a memory. The memory has at least one program code stored therein, and the at least one program code is loaded and executed by the controller, to implement the robotic arm control method. All embodiments of present disclosure further provide a computer device. The computer device includes a processor and a memory. The memory has at least one segment of program. The at least one segment of program is loaded and executed by the processor, to implement the robotic arm control method.

All embodiments of present disclosure further provide a computer-readable storage medium. The computer-readable storage medium has a computer program stored therein. The computer program is configured to be executed by a processor, to implement the robotic arm control method. In all embodiments, the computer-readable storage medium may include: a read-only memory (ROM), a random access memory (RAM), a solid-state drive (SSD), an optical disc, or the like. The random access memory may include a resistance random access memory (ReRAM) and a dynamic random access memory (DRAM). The sequence numbers of the foregoing embodiments of present disclosure are merely for description purpose but do not indicate the preference of the embodiments.

A person of ordinary skill in the art may understand that all or some of the steps of the foregoing embodiments may be implemented by using hardware, or may be implemented by a program instructing relevant hardware. The program may be stored in a computer-readable storage medium. The computer-readable storage medium may be a read-only memory, a magnetic disk, an optical disc, or the like. The foregoing descriptions are merely exemplary embodiments of present disclosure, but are not intended to limit present disclosure. Any modification, equivalent replacement, or improvement made within the spirit and principle of present disclosure shall fall within the protection scope of present disclosure.

All embodiments of present disclosure further provide a chip. The chip includes a programmable logic circuit or a program. The chip is configured to implement the robotic arm control method provided in the foregoing method embodiments. All embodiments of present disclosure further provide a computer program product. The computer program product includes computer instructions. The computer instructions are stored in a computer-readable storage medium. A processor of a computer device reads the computer instructions from the computer-readable storage medium, and the processor executes the computer instructions, so that the computer device performs the robotic arm control method according to any one of the foregoing embodiments.

**Claims**

1. A robotic arm control method, executable by a controller of a robotic arm, comprising:

   obtaining a first motion state of a system comprising a first link of the robotic arm and a movable object placed on the first link;
   determining a first mapping relationship for mapping the first motion state to a first control information for controlling the first link to cause the movable object to be in a pre-defined balanced state on the first link;
   determining the first control information based on the first mapping relationship and the first motion state, in order to control a movement of the first link according to the first control information thereby causing the movable object to be in the pre-defined balanced state on the first link.

2. The method according to claim 1, wherein the first motion state comprises a second motion state associated with a pitch movement of the first link and a third motion state associated with a roll movement of the first link, the first mapping relationship comprises a second mapping relationship and a third mapping relationship; the determining the first control information based on the first mapping relationship and the first motion state comprises:

   determining a second control information based on the second mapping relationship and the second motion state, the second mapping relationship being configured for mapping the second motion state to the second control information, the second control information being configured for controlling the pitch movement of the first link; and
   determining a third control information based on the third mapping relationship and the third motion state, the third mapping relationship being configured for mapping the third motion state to the third control information, the third control information being configured for controlling the roll movement of the first link.

3. The method according to claim 2, wherein the second motion state comprises a first pitch angle of the first link, the second control information comprises a first torque for controlling the pitch movement of the first link, and the determining the second control information based on the second mapping relationship and the second motion state comprises:
   determining the first torque based on the second mapping relationship and the first pitch angle.

4. The method according to claim 2, wherein the third motion state comprises an included angle between the movable object and a horizontal plane, the third control information comprises a second torque for controlling the roll movement of the first link, and the determining the third control information based on the third mapping relationship and the third motion state comprises:
   determining the second torque based on the third mapping relationship and the included angle.

5. The method according to claim 1, wherein the first mapping relationship is configured for mapping the first motion state in a three-dimensional space to the first control information, and the first control information is configured for controlling a roll movement and a pitch movement of the first link.

6. The method according to claim 5, wherein the first motion state comprises: a distance in a first direction between a center of the movable object and a center of a joint that controls the first link to rotate, and an included angle between the movable object and a horizontal plane, the first direction is an axial direction of the first link; and the first control information comprises: a first torque for controlling a pitch movement of the first link, and a second torque for controlling a roll movement of the first link; the first mapping relationship comprises: a first sub-mapping relationship for mapping the distance to the first torque, and a second sub-mapping relationship for mapping the included angle to the second torque; and
   the determining the first control information based on the first mapping relationship and first motion state comprises:

   determining the first torque based on the first sub-mapping relationship and the distance; and
   determining the second torque based on the second sub-mapping relationship and the included angle.

7. The method according to any one of claims 1 to 6, wherein the determining a first mapping relationship for mapping the first motion state to a first control information for controlling the first link to cause the movable object to be in a pre-defined balanced state on the first link comprises:
constructing the first mapping relationship based on the first motion state.

8. The method according to claim 7, wherein the first mapping relationship comprises a second mapping relationship and a third mapping relationship, and the constructing the first mapping relationship based on the first motion state comprises:

determining a first kinetic energy of the system and a first potential energy of the system associated with a pitch movement of the first link and a second kinetic energy of the system and a second potential energy of the system associated with a roll movement of the first link based on the first motion state, the first kinetic energy and the first potential energy being configured for constructing a first Euler-Lagrange equation, the second kinetic energy and the second potential energy being configured for constructing a second Euler-Lagrange equation; and determining the second mapping relationship based on the first Euler-Lagrange equation, determining the third mapping relationship based on the second Euler-Lagrange equation, wherein the second mapping relationship is configured for mapping a second motion state associated with a pitch movement of the first link to a second control information for controlling the pitch movement of the first link, the third mapping relationship is configured for mapping a third motion state associated with a roll movement of the first link to a third control information for controlling the roll movement of the first link.

9. The method according to claim 8, wherein the determining the second mapping relationship based on the first Euler-Lagrange equation comprises:

obtaining, based on the first Euler-Lagrange equation, a first dynamic equation for a first degree of freedom and a second dynamic equation for a second degree of freedom; and determining the second mapping relationship based on the first dynamic equation and the second dynamic equation, the first degree of freedom being associated with a pitch movement of the first link, the first dynamic equation being configured for describing a drive constraint associated with a pitch movement of the first link, the second degree of freedom being a degree of freedom associated with a movement of the movable object in a first direction being an axial direction of the first link, and the second dynamic equation being configured for describing a drive constraint associated with the movement of the movable object in the first direction.

10. The method according to claim 8, wherein the determining the third mapping relationship based on the second Euler-Lagrange equation comprises:

obtaining, based on the second Euler-Lagrange equation, a third dynamic equation for a third degree of freedom and a fourth dynamic equation for a fourth degree of freedom; and determining the third mapping relationship based on the third dynamic equation and the fourth dynamic equation, the third degree of freedom being a degree of freedom associated with the roll movement of the first link , the third dynamic equation being configured for describing a drive constraint on the first link in the third degree of freedom, the fourth degree of freedom being a degree of freedom associated with an included angle between the movable object and a horizontal plane, and the fourth dynamic equation being configured for describing a drive constraint on the movable object in the fourth degree of freedom.

11. The method according to claim 7, wherein the constructing the first mapping relationship based on the first motion state comprises:
determining a third kinetic energy and a third potential energy in a three-dimensional space based on the first motion state, the third kinetic energy and the third potential energy being configured for constructing a third Euler-Lagrange equation; and determining the first mapping relationship based on the third Euler-Lagrange equation.

12. The method according to claim 11, wherein the determining the first mapping relationship based on the third Euler-Lagrange equation comprises:

obtaining, based on the third Euler-Lagrange equation, a first dynamic equation for a first degree of freedom, a second dynamic equation for a second degree of freedom, a third dynamic equation for a third degree of freedom, and a fourth dynamic equation for a fourth degree of freedom; and determining the first mapping relationship based on the first dynamic equation, the second dynamic equation, the third dynamic equation, and the fourth dynamic equation,

the first degree of freedom being associated with a pitch movement of the first link, the first dynamic equation being configured for describing a drive constraint associated with a pitch movement of the first link, the second degree of freedom being a degree of freedom associated with a movement of the movable object in a first direction being an axial direction of the first link, and the second dynamic equation being configured for describing a drive constraint associated with the movement of the movable object in the first direction; the third degree of freedom being a degree of freedom associated with the roll movement of the first link, the third dynamic equation being configured for describing a drive constraint on the first link in the third degree of freedom, the fourth degree of freedom being a degree of freedom associated with an included angle between the movable object and a horizontal plane, and the fourth dynamic equation being configured for describing a drive constraint on the movable object in the fourth degree of freedom.

13. The method according to any one of claims 1 to 6, wherein the controlling a movement of the first link according to the first control information thereby causing the movable object to be in the pre-defined balanced state on the first link comprises:

controlling, according to the first control information, the first link to perform at least one movement, thereby causing the movable object to be in the pre-defined balanced state on the first link,
the at least one movement of the first link comprising at least one of : keeping relatively stationary to the movable object, a roll movement and a pitch movement.

14. The method according to claim 13, wherein the controlling, according to the first control information, the first link to perform at least one movement, to cause the movable object to be in the pre-defined balanced state on the first link comprises:

controlling, according to the first control information, the first link to perform the at least one movement, thereby causing the movable object to be in a statically balanced state, the movable object in the statically balanced state being stationary to the first link; and
controlling, according to the first control information, the first link to perform at least one movement, thereby causing the movable object to be in a dynamically balanced state, the movable object in the dynamically balanced state translating or rolling on the first link.

15. The method according to any one of claims 1 to 6, wherein the obtaining the first motion state of a system comprising a first link of the robotic arm and the movable object placed on the first link comprises:

obtaining the first motion state of the system based on a visual sensor; or
obtaining the first motion state of the system based on the visual sensor and a tactile sensor.

16. A robotic arm control apparatus, comprising:

an obtaining module, configured to obtain a first motion state of a system comprising a first link of the robotic arm and a movable object placed on the first link;
a determining module, configured to determine a first mapping relationship for mapping the first motion state to a first control information for controlling the first link to cause the movable object to be in a pre-defined balanced state on the first link; and
a control module, configured to determine the first control information based on the first mapping relationship and the first motion state, in order to control a movement of the first link according to the first control information thereby causing the movable object to be in the pre-defined balanced state on the first link.

17. A controller, comprising a memory and a processor,
the memory having at least one program code stored therein, and the program code being loaded and executed by the program code, to implement the robotic arm control method according to any one of claims 1 to 15.

18. A computer-readable storage medium, having a computer program stored therein, the computer program being executed by a processor, to implement the robotic arm control method according to any one of claims 1 to 15.

19. A chip, comprising a programmable logic circuit and/or program instructions, and being configured to implement, when an electronic device in which the chip is installed runs, the robotic arm control method according to any one of claims 1 to 15.

20. A computer program product, comprising computer instructions, the computer instructions being stored in a computer-readable storage medium, and a processor reading the computer instructions from the computer-readable storage medium and executing the computer instructions, to implement the robotic arm control method according to any one of claims 1 to 15.

FIG. 1

FIG. 2

Differential
rope actuation
mechanism

FIG. 3

| Obtain a first motion state of a system comprising a first link of the robotic arm and a movable object placed on the first link | 120 |

| Determine the first control information based on the first mapping relationship and the first motion state | 140 |

| Control a movement of the first link according to the first control information thereby causing the movable object to be in the pre-defined balanced state on the first link | 160 |

## FIG. 4

Movable object 502

End 501a

Robotic arm 501

## FIG. 5

Extension line 610

y (Frist direction 614)

z

x (Second direction 612)

Robotic arm 600

End 600a

## FIG. 6

Obtain a first motion state of a system comprising a first link of the robotic arm and a movable object placed on the first link — 120

Determine a second control information based on the second mapping relationship and the second motion state — 141

Determine a third control information based on the third mapping relationship and the third motion state — 142

Determine the first control information based on the first mapping relationship and the first motion state — 143

Control the first link to rotate around the first rotation axis based on the second control information — 161

Control the first link to rotate around the second rotation axis based on the third control information — 162

Control the first link to rotate in the three-dimensional space based on the first control information — 163

FIG. 7

Obtain a first motion state of a system comprising a first link of the robotic arm and a movable object placed on the first link — 120

Determine a first mapping relationship for mapping the first motion state to a first control information for controlling the first link to cause the movable object to be in a pre-defined balanced state on the first link — 130

Determine the first control information based on the first mapping relationship and the first motion state — 140

Control a movement of the first link according to the first control information thereby causing the movable object to be in the pre-defined balanced state on the first link — 160

FIG. 8

Obtain a first motion state of a system comprising a first link of the robotic arm and a movable object placed on the first link — 120

Determine a first kinetic energy of the system and a first potential energy of the system associated with a pitch movement of the first link and a second kinetic energy of the system and a second potential energy of the system associated with a roll movement of the first link based on the first motion state — 1311

Determine a third kinetic energy and a third potential energy in a three-dimensional space based on the first motion state — 1321

Determine the second mapping relationship based on the first Euler-Lagrange equation, and the third mapping relationship based on the second Euler-Lagrange equation — 1312

Determine the first mapping relationship based on the third Euler-Lagrange equation — 1322

Determine the first control information based on the first mapping relationship and the first motion state — 140

Control, according to the first control information, the first link to perform at least one movement, thereby causing the movable object to be in the pre-defined balanced state on the first link — 164

FIG. 9

Bottle

$\theta$

$d$

$\tau 2, \varphi$

First link

FIG. 10

FIG. 11

FIG. 12

FIG. 13

Movable
object

End

Robotic
arm

Movable
object

End

Robotic
arm

Movable
object

End

Robotic
arm

FIG. 14

Movable
object

Robotic arm

End

(a)

Movable
object

Robotic arm

End

(b)

FIG. 15

Robotic arm

Movable object

End

(a)

Movable object

End

Robotic arm

(b)

FIG. 16

Visual data → Bottle state evaluation

2D/3D modeling

Tactile data processing

Controller

Expected value

Inverse kinematics (IK)

Robotic arm state evaluation

Robotic arm

Tactile driver ← Tactile sensor

FIG. 17

Obtaining module — 1820

Determining module — 1840

Control module — 1860

Construction module — 1880

FIG. 18

1901 Controller

1902 Sensor

1905

1904 Memory

1903 Motor

Robotic arm

FIG. 19

## INTERNATIONAL SEARCH REPORT

| International application No. |
|---|
| **PCT/CN2023/130283** |

| A. | CLASSIFICATION OF SUBJECT MATTER |
|---|---|

B25J9/16(2006.01)i

According to International Patent Classification (IPC) or to both national classification and IPC

| B. | FIELDS SEARCHED |
|---|---|

Minimum documentation searched (classification system followed by classification symbols)

IPC:B25J

Documentation searched other than minimum documentation to the extent that such documents are included in the fields searched

Electronic data base consulted during the international search (name of data base and, where practicable, search terms used)

CNTXT, ENTXTC, CJFD, CNKI, 万方, WANFANG: 机器人, 机械手, 机械臂, 调酒, 瓶, 球, 动态, 平衡, 姿势, 姿态, 杂技; ENTXT, VEN, USTXT, WOTXT, EPTXT: robot, manipulator, arm, blending, bottle, ball, trends, balance, posture, gesture, attitude, acrobatics.

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116945154 A (TENCENT TECHNOLOGY (SHENZHEN) CO., LTD.) 27 October 2023 (2023-10-27) <br> description, paragraphs 40-485, and figures 1-19 | 1-20 |
| A | CN 211890879 U (CHONGQING JIANZHU COLLEGE) 10 November 2020 (2020-11-10) <br> description, paragraphs 18-25, and figures 1-2 | 1-20 |
| A | CN 205969048 U (ZHEJIANG SHIWEIBO ROBOT TECHNOLOGY CO., LTD.) 22 February 2017 (2017-02-22) <br> entire document | 1-20 |
| A | CN 218659074 U (TIANQIN TECHNOLOGY CO., LTD.) 21 March 2023 (2023-03-21) <br> entire document | 1-20 |
| A | CN 113043267 A (UBTECH ROBOTICS CORP.) 29 June 2021 (2021-06-29) <br> entire document | 1-20 |
| A | US 4547858 A (ALLIED CORP.) 15 October 1985 (1985-10-15) <br> entire document | 1-20 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 January 2024** | **01 February 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/130283**

| Patent document cited in search report | | | Publication date (day/month/year) | Patent family member(s) | | | Publication date (day/month/year) |
|---|---|---|---|---|---|---|---|
| CN | 116945154 | A | 27 October 2023 | None | | | |
| CN | 211890879 | U | 10 November 2020 | None | | | |
| CN | 205969048 | U | 22 February 2017 | None | | | |
| CN | 218659074 | U | 21 March 2023 | None | | | |
| CN | 113043267 | A | 29 June 2021 | US | 2021197384 | A1 | 01 July 2021 |
| | | | | US | 11331806 | B2 | 17 May 2022 |
| US | 4547858 | A | 15 October 1985 | EP | 0128355 | A2 | 19 December 1984 |
| | | | | EP | 0128355 | A3 | 10 July 1985 |
| | | | | EP | 0128355 | B1 | 19 August 1987 |
| | | | | CA | 1219323 | A | 17 March 1987 |
| | | | | DE | 3465437 | D1 | 24 September 1987 |
| | | | | JP | S607504 | A | 16 January 1985 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   CN 202310365117